# EUROPEAN PATENT APPLICATION

(11) **EP 4 745 816 A1**
(43) Date of publication of application: **20.05.2026**
(21) Application number: 24275128.7
(22) Date of filing: 15.11.2024
(51) Int. Cl.: G06F 21/62, G06F 21/64, H04L 9/08, G06F 16/18

(54) **A DEVICE, A METHOD OF PERFORMING A FILE TRANSACTION, AND A METHOD OF PERFORMING AN ACCESS OPERATION**

(71) Applicant: nCipher Security Limited, Cambridge CB1 2GA (GB)
(72) Inventor: O'DOHERTY, David, Cambridge CB1 2GA (GB)
(74) Representative: Marks & Clerk LLP

(57) **Abstract**

A method of performing a file transaction, the method comprising:
providing a transaction instruction to perform a set of one or more transaction operations on a device storing a filesystem, wherein the filesystem stores, in a first location, first authentication information corresponding to the filesystem state, and wherein the filesystem further stores authentication identification information, the authentication identification information indicating that the first location stores valid authentication information;
performing the one or more transaction operations with an uncommitted type;
generating second authentication information corresponding to the filesystem state after the transaction operations, and storing the second authentication information in a second location in the filesystem;
storing transaction information in the filesytem indicating that the transaction is committed and updating the authentication identification information to indicate that the second location stores valid authentication information.

## Description

### TECHNICAL FIELD

The present invention relates to a device, a method of performing a file transaction, and a method of performing authentication.

### BACKGROUND

Computing devices contain a form of persistent or non-volatile storage used to store information, as well as to store code for the device operation. A hardware security module (HSM) is an example of a computing device. Persistent storage media may also exist independently of a computing device, for example, in a physical authentication token such as a smartcard used for storage of information. Changes may be applied to the information stored in a file system on such storage, for example, a transaction to erase, write or overwrite information.

Storage such as that provided on hardware security modules and smartcards may store sensitive information, such as cryptographic keys. Where a transaction on such storage is interrupted midway through completion, it may result in the file system being left in an intermediate state, for example with only some files or only part of a file having been erased, written or overwritten. For example, if a network connection is lost whilst a transaction is in progress, a transaction failure may occur leaving the file system in an intermediate state.

There is a continuing need to provide mechanisms to mitigate the impact of such transaction failures.

### SUMMARY

According to a first aspect, there is provided a method of performing a file transaction, the method comprising:
providing a transaction instruction to perform a set of one or more transaction operations on a device storing a filesystem, wherein the filesystem stores, in a first location, first authentication information corresponding to the filesystem state, and wherein the filesystem further stores authentication identification information, the authentication identification information indicating that the first location stores valid authentication information;
performing the one or more transaction operations with an uncommitted type;
generating second authentication information corresponding to the filesystem state after the transaction operations, and storing the second authentication information in a second location in the filesystem;
storing transaction information in the filesytem indicating that the transaction is committed and updating the authentication identification information to indicate that the second location stores valid authentication information.

In one example, the authentication information is provided corresponding to the whole filesystem. For example, a Message Authentication Code is generated over a representation of the entire filesystem.

In one example, the second authentication information is generated by performing a cryptographic operation on contents of the filesystem using a first cryptographic key.

In one example, the first cryptographic key is derived using first information stored in the filesystem and second information stored on a second device, wherein the second device is a hardware security module.

In one example, the first authentication information comprises a first Message Authentication Code (MAC) and the second authentication information comprises a second MAC. The first and second MACs assure the integrity and authenticity of the filesystem. When a transaction is in progress on the filesystem, one field contains the MAC of the filesystem before the transaction (first MAC), and another field contains the MAC of the filesystem after the transaction is complete (second MAC). In this manner, it is possible to verify the filesystem if a transaction is interrupted, regardless of whether it is rolled-back or rolled-forward. These elements enable transactional updates so that the authenticity of the filesystem can be verified with either a roll-back or roll-forward.

In one example, performing the transaction operations with an uncommitted type comprises, responsive to determining the transaction instruction comprises one or more write transaction operations, wherein the one or more write transaction operations collectively relate to a first file group comprising at least one file object, the first file group has a first size, and each of the at least one file objects comprises identification information, if the first size does not exceed available device storage, writing each of the at least one file objects with an uncommitted file type into the filesystem;
wherein storing the transaction information in the filesytem indicating that the transaction is committed and updating the authentication identification information to indicate that the second location stores valid authentication information is performed after the first file group is written, wherein the method further comprises:
responsive to determining that one or more pre-existing file objects share identification information with any of the first file group, erasing the one or more pre-existing file objects; and
updating the type of each of the at least one file objects in the first file group to a finalised type.

In one example, writing each of the at least one file objects with an uncommitted file type into the filesystem comprises generating file object authentication information and storing the file object authentication information. In one example, the second authentication information is generated from the file object authentication information.

In one example, at least some content of the filesystem is stored encrypted using a second cryptographic key.

In one example, the method further comprises:
generating a new second cryptographic key;
setting a re-encryption progress flag indicating a re-encryption process is in progress;
re-encrypt the at least some content of the file system using the new second cryptographic key;
unsetting the re-encryption progress flag.

In one example, the second cryptographic key is derived using first information stored in the filesystem and second information stored on a second device, wherein the second device is a hardware security module.

In one example, the contents of the file objects are encrypted using the second cryptographic key, wherein the second cryptographic key is derived using the first information stored in the filesystem. This provides stronger resistance to remanence of data after formatting, since only the first information needs to be securely erased.

In one example, the method further comprises
obtaining a previous maximum transaction count value;
for each file object to which the transaction instruction relates:
   determining a transaction count value; and
   writing the transaction count value in the file object; and
writing a new maximum transaction count value in the second device together with information identifying the filesystem.

In one example, storing of the maximum transaction count value allows to identify the latest version of filesystem. In particular, changes to the filesystem are versioned. The lowest permitted version, or a version range or specific allowed version, along with a first information fingerprint, can be stored separately from the storage device. This provides auditability.

Where a file transaction on a device is interrupted midway through completion, it may result in the file system being left in an intermediate state, for example with only some files or only part of a file written or overwritten. For example, updates to smartcard filesystems carried out remotely over a secure network connection may be interrupted if a network connection is lost, or either the client or HSM end of the connection were removed or switched off. The above-described method provides improved transaction-safety, since the transaction is not considered committed until all of the content, or replacement content if updating one or more files, has been written. This allows the filesystem to be recovered in the event of an interruption, since the transaction may be rolled forward (if committed) or rolled back (if not committed). The method enables automatic recovery of the filesystem to a consistent state after a failure. The method therefore mitigates against loss of data in failure scenarios.

Furthermore, the method is suitable for use in a small footprint filesystem. By writing each of the at least one file objects with an uncommitted file type, and then, after the first file group is written, storing transaction information on the device indicating that the transaction instruction is committed, progress of the transaction is logged without storage of a separate 'transaction log'. This makes the method particularly suited to smartcards for example, which may have storage of 1 to 10 KB, or other small secure storage areas on a hardware device.

In one example, the method further comprises determining whether the first size exceeds an available storage on the device. Optionally, if the file size to be written does exceed an available storage on the device, a transaction with a downgraded transaction safety may be performed, e.g. so that safety is only per file, rather than per group of files. In this case, the method may further comprise performing a first determination of whether there is sufficient space to write a file object; responsive to determining that there is sufficient space to write the file object, writing the file object; responsive to determining that there is not sufficient space to write the file object: storing transaction information on the device indicating that a transaction is committed; determining whether any pre-existing file objects share identification information with any of first file group which have been written with an uncommitted file type, and responsive to determining that one or more pre-existing file objects share identification information, erasing the one or more of the pre-existing file objects; performing a second determination of whether there is sufficient space to write the file object; responsive to determining that there is sufficient space to write the file object in the second determination, writing the file object.

A further downgraded transaction safety level may optionally be applied, where an overwritten file may be erased first to free up space. Responsive to determining that there is not sufficient space to write the file object in the second determination, the method may further comprise: determining whether any pre-existing file object shares identification information with the file object, and responsive to determining that a pre-existing file object shares identification information, erasing the pre-existing file object; and writing the data in the file object. This drop-down approach to a lower consistency level where there is insufficient space for the full consistency to be applied means that transaction behaviour need not limit the effective storage space.

Files not included in a transaction instruction will not be marked as uncommitted at any point. The only changes to files not included in a transaction instruction will be to move them if compacting the filesystem.

Transaction progress can be indicated using a system of flags, applied in well-defined sequences, so that an interrupted transaction in the filesystem can either be rolled forward or backwards. A flag may be used to indicate a committed transaction. According to one example, the method further comprises clearing the committed flag after the type of each of the at least one file objects is updated to a finalised type. The method may further comprise setting a progress flag indicating a file transaction is in progress. The flags may be updated in such a way that a 'corrupted' filesystem is not readable by a malicious user, including formatting in such a way as to ensure that an interrupted format is detectable. For example, during a format, the `type' of the filesystem in general can be set to zero in a general filesystem header, which would indicate a corrupt filesystem to a user. Furthermore, values other than zero (e.g., 0xFF in hexadecimal), may be used to indicate an unformatted and/or corrupt filesystem.

Alternatively, storing transaction information indicating that the transactions are committed comprises updating the type of each of the at least one file objects to a committed type.

The method may also mitigate against other interruption issues such as removing a smartcard from a reader during a write, power failure, disconnection of a card reader cable during a write, or a software crash in the smartcard or in the HSM during a write.

A failure may occur whereby an individual byte write fails. The above-described method provides a mechanism whereby files are not considered committed until all of their content, or replacement content if updating a file, has been written.

Interruption of a transaction may result in a corrupt filesystem, whereby the filesystem can no longer be navigated e.g. due to file headers being corrupt due to an interrupted change. For example, where the files have their lengths stored in the file header, if that is corrupted the locations of subsequent files in memory would not be known. Furthermore, a failure may occur whereby an individual byte write fails. In this case, a corrupt file might arise due to only part of the file being written for example. A corrupt file might arise due to a partial update being applied if there is an existing file, or due to only part of the file being written if it is a new file. Filesystem-level corruption due to interrupted header updates or interrupted compacting of the filesystem to free up space could also result in apparently readable files with the wrong content.

In one example, updating of a file header comprises storing a redundant copy of the file length. For example, a procedure for updating of a file header may comprise storing a first copy of the new file length, storing information indicating that the header length is uncommitted for the file, and updating the file header with the new file length. The information is then changed to no longer indicate that the header length is uncommitted after the file header is updated. If an interruption occurs, the file header can be rolled forward if the information indicating the header length is uncommitted is stored, based on the first copy of the new file length.

The first copy of the new file length may be stored in the filesystem header for example. Alternatively, the first copy of the new file length may be stored in reserved space within the file header. In this way, file header updates are written so that interruption when writing any given byte does not result in a malformed filesystem or one where the wrong content appears to be present in a file. Furthermore, no files not included in a transaction can be lost since file header updates are performed in a manner that means the filesystem can still be navigated if a change was interrupted. Improved availability is provided by mitigating against corrupt files or a corrupt filesystem on a storage device. Improved security is also provided due to resistance to malicious corruption of storage contents by attackers. The scheme mitigates against corruption that could be done maliciously to cause incorrect data to be read by a secure system.

In one example, the underpinning system will write individual bytes atomically and the ordering between writes will be preserved. No assumption is made on the order of writing multiple bytes in a single write operation.

In one example, writing a file object with an uncommitted file type comprises searching for any freespace blocks having a size greater than or equal to the file object, responsive to finding two or more freespace blocks, selecting the free space block having the least excess available space which, when written to, would not result in a remaining space block below a minimum size. Responsive to finding no freespace blocks, a compaction method may be performed. A compaction method may comprise: moving a pre-existing file object of length L; storing information specifying an entry type of the entry being moved, the offset of the original start, F2, of the entry data relative to the new start, F1, of the entry, and the length of data which has been successfully moved, M, where M is initially set to zero; wherein moving the pre-existing file comprises: i. writing the next X bytes of the entry starting at address F1+M, where X is the minimum chosen from: the offset and (L-M), ii. updating the value of M stored in the fragment index; iii. set M = M+X and repeat steps i to iii until M is equal to L. The compacting algorithm is performed in a manner that mitigates against loss of data in the event of interruption. All file contents are recoverable even if they are in two fragments during the move.

In one example, the method provides to avoid loss of a file that is updated in a transaction when the update to that file is a redundant no-op, since the existing file data is read and compared to the new data. If they are the same, they are removed from the list of files actually processed.

In one example, performing the one or more transaction operations with an uncommitted type comprises, responsive to determining that the transaction instruction comprises one or more erase transaction operations, the one or more erase transaction operations collectively relating to a second file group to be erased from the device storage, the second file group comprising at least one file object, updating each of the at least one file objects in the second file group to an uncommitted erase type;
wherein storing the transaction information in the filesytem indicating that the transaction is committed and updating the authentication identification information to indicate that the second location stores valid authentication information is performed after the second file group is updated to an uncommitted erase type; and wherein the method further comprises:
erasing the second file group.

In one example, erasing the one or more of the pre-existing file objects comprises: updating an entry type of the pre-existing file object to indicate an uncommitted freespace type, overwriting the pre-existing file object with zeros; and updating the entry type to indicate a freespace type. The method may further comprise, responsive to determining that newly formed freespace is adjacent to one or more further freespace entries, coalescing said adjacent entries to form a single freespace entry.

In one example, the method further comprises, responsive to determining that the transaction instruction comprises one or more erase transaction operations, the one or more erase transaction operations collectively relating to a second file group to be erased from the device, the second file group comprising at least one file object, updating each of the at least one file objects in the second file group to an uncommitted erase type; and after the second file group is updated to an uncommitted erase type, storing transaction information on the device indicating that a transaction is committed; erasing the first file group. Storing the transaction information indicating that a transaction is committed may comprise setting a committed flag, and wherein the method further comprises clearing the committed flag after erasing the first file group. If the transaction instruction comprises one or more write transaction operations and one or more erase transaction operations, the transaction information indicating that the transaction is committed is stored after the first file group is written and after the second file group is updated to an uncommitted erase type.

According to a further aspect, there is provided a method for performing authentication of a filesystem stored on a first device, comprising:
obtaining authentication identification information in the filesystem, the authentication identification information indicating a location storing valid authentication information;
obtaining stored authentication information from the location indicated by the authentication identification information;
authenticating the filesystem based on the stored authentication information.

In one example, authenticating the filesystem based on the stored authentication information comprises:
generating generated filesystem authentication information corresponding to the filesystem;
comparing the generated filesystem authentication information to the obtained stored authentication information.

In one example, authenticating the filesystem based on the stored authentication information comprises generating a first cryptographic key.

In one example, the generated authentication information is generated by performing a cryptographic operation on contents of the filesystem using the first cryptographic key.

In one example, the first cryptographic key is derived using first information stored in the filesystem and second information stored on a second device, wherein the second device is a hardware security module.

In one example, the method further comprises:
determining whether the filesystem stores transaction information indicating that a transaction is committed;
determining whether there are any file objects in the filesystem having an uncommitted file type;
responsive to determining that the device stores transaction information indicating that a transaction is committed and there are one or more file objects having an uncommitted file type:
   updating the type of the one or more file objects having an uncommitted file type to a finalised type; and
   authenticate the filesystem based on the stored authentication information authenticating the filesystem based on authentication information stored in a first location; and
responsive to determining that the device does not store transaction information indicating that a transaction is committed and there are one or more file objects having an uncommitted file type:
   erasing the files having an uncommitted file type; and
   authenticating the filesystem based on authentication information stored in a second location.

In one example, the method further comprises:
retrieving a transaction count value from a second device;
retrieving a transaction count value from each file object in the filesystem, and determining a maximum transaction count value for the filesystem; and
comparing the transaction count value retrieved from the second device and the maximum transaction count value for the filesystem, wherein responsive to the transaction count value retrieved from the second device being different to the maximum transaction count value, preventing an access operation.

In one example, the method further comprises:
determining whether a re-encryption progress flag is set;
responsive to determining the re-encryption progress flag is set;
   determining a location corresponding to the progress of the re-encryption process;
   continuing the re-encryption process based on the determined location.

Where a process in a file system in devices such as HSMs or smartcards is interrupted midway through completion, the file system may become susceptible to a malicious attack. For example, where a format procedure is interrupted, this may mean that not all data is erased. Maliciously ordered and timed updates to a filesystem on a storage device could cause attacker-controlled corruption that either leaks secrets, bypasses access controls or causes corruption of the rest of the device. The recovery procedure mitigates against such attacks, by automatically rolling forward or back an interrupted procedure when access is attempted.

In one example, responsive to determining that the device stores transaction information indicating that a transaction is committed and there are one or more file objects having an uncommitted file type: and responsive to determining that one or more pre-existing file objects share identification information with any of the files having an uncommitted file type, erasing the one or more of the pre-existing file objects.

In one example, the method further comprises determining whether a flag indicates a transaction is in progress, and wherein if it is determined that the flag indicates a transaction is not in progress, determination of whether the device stores transaction information indicating that a transaction is committed and whether there are any file objects having an uncommitted file type are not performed. In one example, the method further comprises determining whether one or more flags indicate a valid state of the device; and responsive to determining that the state of the device is not valid, returning an error.

In one example, the method further comprises determining whether there are any file objects having an uncommitted erase type, and responsive to determining that the device stores transaction information indicating that a transaction is committed and that one or more file objects have an uncommitted erase type, erasing the one or more file objects having an uncommitted erase type. In one example, responsive to determining that the device does not store transaction information indicating that a transaction instruction is committed and that one or more file objects have an uncommitted erase type, the method further comprises restoring the one or more file objects to a finalised type.

The methods define a new "uncommitted file" type and "uncommitted erase file" type. This mitigates against corrupt files being readable when an interrupted filesystem state is read by an earlier version of the filesystem.

According to a further aspect, there is provided a method of performing a file transaction, the method comprising:
providing a transaction instruction to perform a set of one or more transaction operations on a device storing a filesystem,
obtaining a previous maximum transaction count value;
for each file object to which the transaction instruction relates:
   determining a transaction count value; and
   writing the transaction count value in the file object; and
writing a new maximum transaction count value in a second device together with information identifying the filesystem.

According to a further aspect, there is provided a method of performing an access operation on a filesystem stored on a first device, the method comprising:
retrieving a transaction count value from a second device;
retrieving a transaction count value from each file object in the filesystem, and determining a maximum transaction count value for the filesystem; and
comparing the transaction count value retrieved from the second device and the maximum transaction count value for the filesystem, wherein responsive to the transaction count value retrieved from the second device being different to the maximum transaction count value, preventing an access operation.

According to another aspect, there is provided a method of accessing a filesystem, comprising:
determining whether the filesystem stores transaction information indicating that a transaction is committed;
determining whether there are any file objects in the filesystem having an uncommitted file type;
responsive to determining that the device stores transaction information indicating that a transaction is committed and there are one or more file objects having an uncommitted file type:
   updating the type of the one or more file objects having an uncommitted file type to a finalised type; and
   authenticating the filesystem based on authentication information stored in a first location; and
responsive to determining that the device does not store transaction information indicating that a transaction is committed and there are one or more file objects having an uncommitted file type:
   erasing the files having an uncommitted file type; and
   authenticating the filesystem based on authentication information stored in a second location.

According to another aspect there is provided a non-transitory data carrier carrying processor control code to, when running, cause a computer to perform the above-described methods. The methods are computer-implemented methods. Since some methods in accordance with embodiments can be implemented by software, some embodiments encompass computer code provided on any suitable carrier medium. The carrier medium can comprise any storage medium such as a CD ROM, a magnetic device or a programmable memory device, or any transient medium such as any signal e.g. an electrical, optical or microwave signal. The carrier medium may comprise a non-transitory computer readable storage medium.

According to a further aspect, there is provided a device, comprising:
one or more processors configured to:
provide a transaction instruction to perform a set of one or more transaction operations on a device storing a filesystem, wherein the filesystem stores, in a first location, first authentication information corresponding to the filesystem state, and wherein the filesystem further stores authentication identification information, the authentication identification information indicating that the first location stores valid authentication information;
perform the one or more transaction operations with an uncommitted type;
generate second authentication information corresponding to the filesystem state after the transaction operations, and storing the second authentication information in a second location in the filesystem;
store transaction information in the filesytem indicating that the transaction is committed and updating the authentication identification information to indicate that the second location stores valid authentication information.

According to a further aspect, there is provided a device, comprising:
one or more processors configured to:
obtain authentication identification information from a filesystem stored on a first device, the authentication identification information indicating a location storing valid authentication information;
obtain stored authentication information from the location indicated by the authentication identification information;
authenticate the filesystem based on the stored authentication information.

According to a further aspect, there is provided a device, comprising:
one or more processors configured to:
provide a transaction instruction to perform a set of one or more transaction operations on another device storing a filesystem,
obtain a previous maximum transaction count value;
for each file object to which the transaction instruction relates:
   determine a transaction count value; and
   write the transaction count value in the file object; and
   store a new maximum transaction count value together with information identifying the filesystem.

According to a further aspect, there is provided a device, comprising:
one or more processors configured to:
   retrieve a transaction count value;
   retrieve a transaction count value from each file object in a filesystem stored on another device, and determining a maximum transaction count value for the filesystem; and
comparing the retrieved transaction count value and the maximum transaction count value for the filesystem, wherein responsive to the transaction count value retrieved from the second device being different to the maximum transaction count value, preventing an access operation.

According to another aspect, there is provided a device comprising:
one or more processors configured to:
determine whether the filesystem stores transaction information indicating that a transaction is committed;
determine whether there are any file objects in the filesystem having an uncommitted file type;
responsive to determining that the device stores transaction information indicating that a transaction is committed and there are one or more file objects having an uncommitted file type:
   update the type of the one or more file objects having an uncommitted file type to a finalised type; and
   authenticate the filesystem based on authentication information stored in a first location; and
responsive to determining that the device does not store transaction information indicating that a transaction is committed and there are one or more file objects having an uncommitted file type:
   erase the files having an uncommitted file type; and
   authenticate the filesystem based on authentication information stored in a second location.

According to a further aspect, there is provided a system, comprising one of the above devices and another device, wherein the device storage is located on the other device.

The device may be a hardware security module. The device storage may be located on the hardware security module, or in a separate device such as a smartcard. In an embodiment, the device storage is persistent storage. In an embodiment, the device is a secure device.

### BRIEF DESCRIPTION OF THE FIGURES

Devices and methods in accordance with non-limiting examples will now be described with reference to the accompanying figures in which:
Figure 1(a) is a schematic illustration of a device in accordance with an example, wherein the device is a hardware security module;
Figure 1(b) is a schematic illustration of an example smart card device;
Figure 2(a) is a schematic illustration of a system comprising a hardware security module device and a smart card device in accordance with an example;
Figure 2(b) is a schematic illustration of a system comprising a hardware security module device and a smart card device in accordance with an example;
Figure 3 illustrates a structure of a filesystem stored on a device in accordance with an example;
Figure 4 is a flowchart showing a method of performing a file transaction in accordance with an example, where a transaction instruction comprises one or more write transaction operations;
Figure 5 illustrates a method of generating second authentication information corresponding to the filesystem, which may be performed as part of a method of performing a file transaction in accordance with an example;
Figure 6 is a flowchart showing a method of performing a file transaction in accordance with an example, where a transaction instruction comprises one or more erase transaction operations;
Figure 7 is a flowchart showing a method of performing a file access operation in accordance with an example;
Figure 8(a) is a flowchart showing an example method of authenticating a filesystem in accordance with an example;
Figure 8(b) is a flowchart of an example method of confirming a transaction count value for a filesystem; and
Figure 9 is a flowchart of an example method of re-encrypting the encrypted contents of the filesystem with a new key.

### DETAILED DESCRIPTION

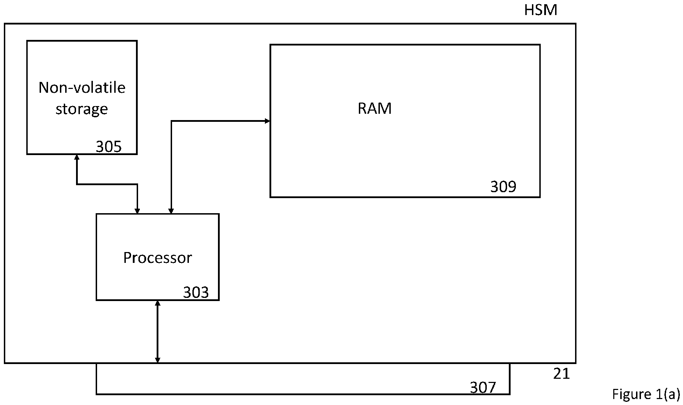

Figure 1(a) is a schematic illustration of a hardware security module (HSM) 21 device according to an example. A HSM is a device that securely stores and manages cryptographic keys, and performs a set of cryptographic functions. A HSM may comprise both physical and non-physical properties that provide security. Non-physical security properties can include the use of encryption, i.e. the inclusion in the device of software or a physical component to perform encryption of the stored data. Physical security properties can include tamper switches triggered by physical access, and a tamper proof membrane surrounding the physical boundary of the device for example.

The HSM 21 comprises non-volatile or persistent storage 305. The storage 305 stores information, such as cryptographic keys, and programs. The non-volatile storage 305 may include any form of non-volatile device memory such as flash, optical disks or magnetic hard drives for example. The non-volatile memory 305 may be physically secure and may be resistant to tamper by a third party, for example by the inclusion of physical security such as a membrane that covers the entire device, that cannot be removed without destroying the underlying physical hardware. The non-volatile storage area 305 may store a filesystem. The filesystem is used for the storage and retrieval of data, such as cryptographic key material for example.

The HSM 21 further comprises processor 303 which is configured to execute programs stored in the non-volatile memory 305. The processor 303 may comprise a central processing unit, a field programmable gate array (FPGA), an application specific integrated circuit (ASIC), or some combination of one or more such components for example. One or more programs may be referred to as the "main application" or the "firmware" in the below. The programs comprise a set of computer instructions stored in the non-volatile memory 305. The computer instructions may be written in any of a number of programming languages. The main application comprises computer instructions embodying one or more of the methods as described herein. The main application may further comprise computer instructions embodying one or more of the following cryptographic functions for example: cryptographic key generation; key derivation; encryption; decryption; and digital signature functions (for example digital signing or validation of a digital signature).

The processor 303 is in wired bi-directional communication with the non-volatile storage 305 and in wired bi-directional communication with working memory or RAM 309. RAM 309 corresponds to the operating memory of the processor 303. The processor 303 comprises logic circuitry that responds to and processes the instructions in code stored in the working memory 309. In particular, when executed, a program is represented as a software product, or process, stored in the working memory 309.

The main application can be embedded in the hardware security module when manufactured, or can be provided, as a whole or in part, after manufacture. For instance, the main application can be introduced as a computer program product, which may be in the form of a download. Alternatively, modifications to existing main application can be made by an update, or plug-in.

Execution of various programs by the processor 303 will cause methods as described herein to be implemented.

The HSM device 21 may comprise further components, such as a board support processor configured to communicate with a plurality of on-board sensors, monitoring the operation of the main processor and the other hardware components of the hardware security module 21. The HSM device 21 may further comprise a random number generator component for example.

Application keys associated with a client are used to perform one or more cryptographic functions embodied in the main application on the HSM 21. When a client request in the form of a command is received at the HSM 21, the relevant application key or keys are retrieved and loaded into the RAM space of the main application process. They may then be used by the hardware security module 21 to perform one or more cryptographic operations as have been described above. These keys may be stored on the HSM device 21 in the non-volatile storage 305. Alternatively, these keys may be stored in an encrypted manner externally to the HSM device 21, and loaded onto the HSM device 21 when required for performing a particular cryptographic operation. For example, the keys belonging to applications may be stored on a smart card. For greater security, keys may be encrypted by an HSM key, and subsequently split across multiple smart cards using secret sharing schemes that allow a quorum of the cards to reconstruct the original key (e.g. there may be 5 cards with portions of the key, and any 3 have enough information to reconstruct the key). The portion of key information on each smart card is referred to as a "share".

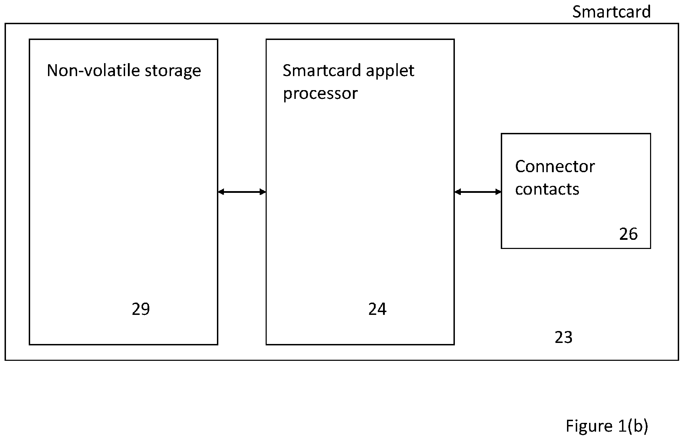

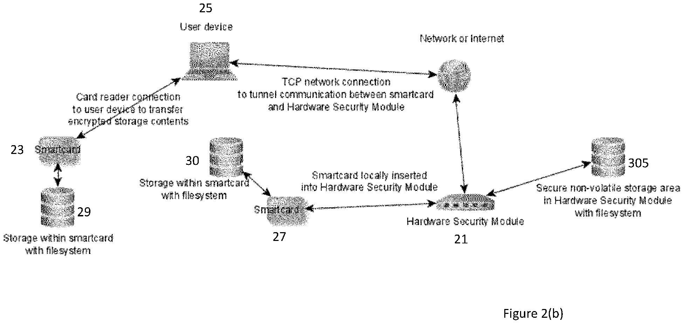

Figure 1(b) is a schematic illustration of an example smartcard storage device 23 which may be included in a system according to an example. The smart card storage device 23 comprises non-volatile or persistent storage 29. The storage 29 stores information, such as cryptographic key material (e.g. keys or information that can be used to reconstruct a key). The non-volatile storage 29 may include any form of non-volatile device memory such as flash, optical disks or magnetic hard drives for example. The smartcard applet processor 24, which is optionally present on some smartcards, represents any processing control that exists between the connector contacts 26 and the storage. The applet processor 24 may be fixed circuitry, or a small programmable environment for example. Where the smart card is being used remotely (e.g. smartcard 23 in Figure 2(b)) this applet processor 24 contains the logic for terminating one end of the secure communication channel with the HSM. With a smart card inserted locally into an HSM, the communication may or may not be done over a secure channel.

Devices such as HSMs and smartcards may contain small footprint storage media, for example having a total storage capacity of less than 1 megabyte (MB), or even less than 64 kilobytes (KB). For example, authentication tokens, such as smartcards, may contain small footprint storage of 1 to 10 KB.

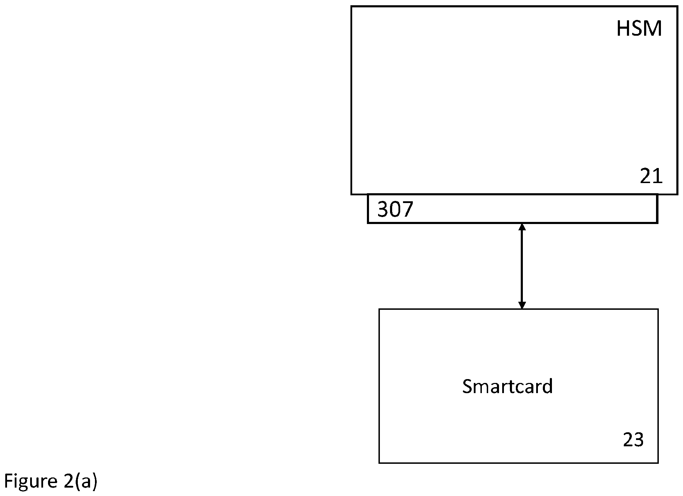

Figure 2(a) shows a schematic illustration of a system according to an example, comprising a HSM device 21 and a smart card device 23.

The HSM device 21 and the smart card 23 are in communication. For example, the smart card 23 may be inserted into a card reader connected to a computer or server device in a client system. The HSM 21 may be communicatively coupled to a computer or server device in a host system through interface 307, which comprises a communication link. Communication between the user computer or server device and the host system computer or server device may be performed via an Internet connection. Alternatively, the smart card device may be locally inserted into the HSM device 21 for example.

A user may connect the smartcard 23 to the HSM device 21 and send a command to the HSM device 21 comprising transaction information - for example, requesting that a new file be written to the smart card 23, that a file on the smart card 23 be updated, or that a file on the smart card 23 be erased.

In the example described here, the algorithms described below execute on the HSM device 21. Computer program code which, when executed, implements the functionality described herein may be provided in HSM firmware for example. The algorithms operate on internal and/or external storage, but may execute only within the HSM, treating the storage simply as a piece of memory. The HSM device 21 may perform access operations and file transactions on the local HSM storage 305. The HSM device 21 may additionally or alternatively perform access operations and file transactions on the smart card 23. In more detail, the smart card 23 comprises smart card storage which stores a filesystem. The HSM 21 comprises a secure non-volatile storage area 305 which stores another filesystem. The filesystems stored on the smart card 23 and HSM 21 are used for the storage and retrieval of data, such as cryptographic key material for example.

Smartcard storage is viewed as memory that can be read from and written to by the HSM 21 through some implementation-specific interface. This might be a virtual mapping of the smart card device memory, so that it can transparently be written to in implementation code in the same way as the HSM 21 would write to local memory. Device read and write functions provided by a lower layer which accept or return a byteblock and take a memory address (and length to read if reading) as a parameter may be used, where the lower layer translates those reads and writes into the appropriate device-specific operations for the underlying HSM local storage or smart card device type in question. It will be understood by the skilled person that in practice there will be one or more layers of code and communication between the algorithms described herein and the device storage in order to support the implementation of the read and write operations, such as device drivers on the HSM and small amounts of support code running on a smart card for example. More sophisticated smartcards, such as JavaCards that are themselves capable of running programs, are still treated as memory to be written to and read from by the HSM 21, and the code relating to the algorithms described herein is executed on the HSM 21 itself in this example. Such smartcards may have logic for setting up secure communication with the HSM, but this does not impact the performance of the algorithms described below.

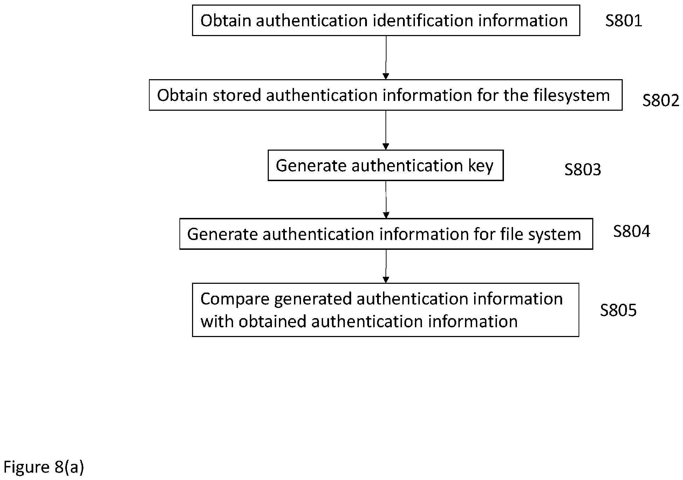

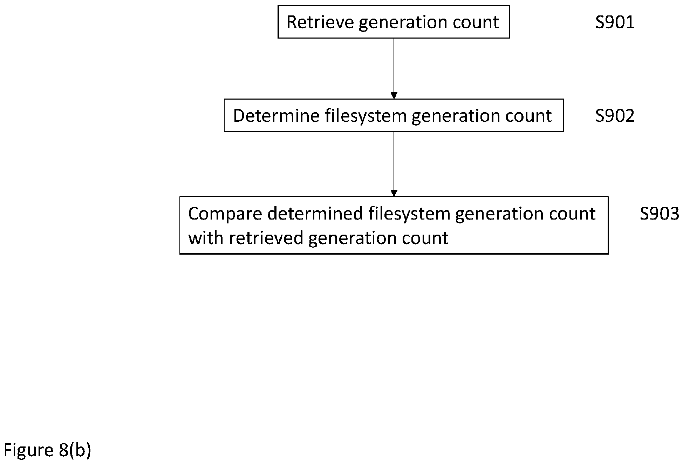

It is further noted that whenever the algorithms specify that a read from storage takes place, this may actually be reading from a cache in the HSM memory if the implementation has already read that portion of storage, or has previously written that portion of storage. Any such cache would be invalidated when the storage device is removed if it is a removable storage device such as a smart card. As described in relation to Figure 8 below, an authentication method may be performed when the storage device is initially connected to the HSM, before the HSM caches the data.

It is further noted that whenever the algorithms specify that a write takes place, this is required to be a synchronous operation, so that when the write operation reports back that it has completed successfully, the specified bytes will have been written to the actual underlying storage successfully and not merely to a cache. No assumptions are made about the intermediate state of the writes (e.g. the individual bytes in the byteblock being written could be written from highest address to lowest address rather than the reverse, or in chunks), provided that any individual byte that is written is written atomically, i.e. any individual byte is either one that the algorithm asked to be written or else it is not written at all, but never a corrupt byte.

Figure 2(b) shows a schematic illustration of another system according to an example, comprising a HSM device 21 and a first smart card device 23 belonging to a client. The system further comprises a client device, user device 25. The user device 25 may be a general-purpose computer. Such an arrangement may be used when the first smart card 23 and user device 25 are in a first location whereas the HSM 21 is in a second location, remote from the first location. The second location may be a host system, for example a cloud service provider system.

Also illustrated is a second smart card device 27 locally inserted into the HSM device 21. Such an arrangement may be used for HSMs directly placed inside or plugged into a client PC or server that is directly under client control for example.

The second smart card 27 may be provided instead of the first smart card 23, or in addition to the first smart card 23 as shown in the figure.

The figure illustrates various ways in which a HSM device 21 may perform access operations and file transactions as described in relation to the methods below on device storage. In particular, the HSM device 21 may perform access operations and file transactions on a remote smart card, such as on the first smart card device storage 29. The HSM device 21 may additionally or alternatively perform access operations and file transactions on a locally inserted smart card, such as on the second smart card device storage 30. The HSM device 21 may also perform access operations and file transactions on the local HSM storage 305.

Again in this example, the algorithms described below execute on the HSM device 21, where smartcard storage is seen as memory to read from and write to through some implementation-specific interface.

The first smart card 23 comprises first smart card storage 29 which stores a first filesystem. The second smart card 27 comprises second smart card storage 30 which stores a second filesystem. The HSM 21 comprises a secure non-volatile storage area 305 which stores a third filesystem 31. The filesystem stored on each of the first smart card 23, second smart card 27 and HSM 21 is a filesystem used for the storage and retrieval of data, such as cryptographic keys for example. Storage on the smart cards 23 and 27 and HSM 21 may have sizes ranging from hundreds of bytes to around 64 KB for example. Various transactions may be performed on the different filesystems, using the methods described herein. For example, changing a passphrase on the first smartcard 23 involves replacing existing files stored on the first smartcard 23 with new files encrypted with the new passphrase. This may be performed using an overwrite transaction as will be described herein.

The first smart card 23 is inserted into a card reader connected to the user device 25. The first smart card 23 uses its own application to establish a secure channel of communication to the HSM 21. The card reader connection to the user device 25 allows storage contents to be transferred to and from the smart card 23. The HSM 21 may be communicatively coupled to a computer or server device in the host system (not shown) through interface 307, which comprises a communication link. For example, it may comprise a USB connector, or the HSM device 21 can be a PCI express card directly plugged into the computer or server device. Communication between the user device 25 and the host system may be performed via an Internet connection. A TCP network connection is used to tunnel communication between the first smart card 23 and the HSM 21, via the user device 25 and a device in the host system (not shown). The PCI Express or USB connector in interface 307 is used for communication with the HSM device 21, included sending commands and receiving replies, and as the conduit for any network communication such as with remote smart cards with which the HSM communicates over an encrypted and authenticated secure channel. The PCI Express or USB connection would be made to a host PC or server. A host server can also be a tamper-evident chassis provided with the HSM and not user-serviceable.

The second smartcard 27 is locally inserted into the HSM 21. The HSM may have a separate serial connector for a locally attached smart card reader, which may be an external reader plugged in to a socket on the HSM by a user, or may be embedded in a surrounding chassis around the HSM and not plugged in by a user. The locally attached reader may support less sophisticated smart card types (that are largely dumb storage) as well as smart cards that have their own application running on them to establish a secure channel of communication to the HSM. Less sophisticated smartcards are not used remotely as they are not capable of making such a secure channel.

Execution of various programs by the processor 303 on the HSM 21 will cause methods as described herein to be implemented, in order to execute transactions on the first smartcard 23 filesystem, the HSM local storage 305, and/or the second smart card filesystem 30. Implementation code corresponding to the various methods described herein is contained in HSM main application on the HSM 21. For example, updates to the first smartcard 23 filesystem are initiated by the HSM 21 and carried out remotely, i.e. over the network connection. Network connections may fail midway through an update procedure, or either the client or HSM end of the connection could be removed or switched off mid-way.

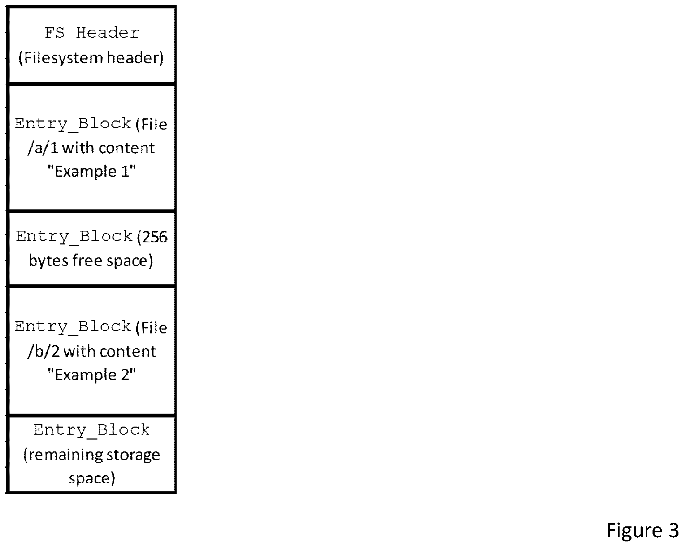

Figure 3 is a schematic illustration of a filesystem structure which may be stored on a device, such as a smart card or HSM as described previously, in accordance with an example. The diagram shows a 1024-byte filesystem with a header, a first file called "/a/1" with content "Example 1", a free-space gap, a second file called "/b/2" with content "Example 2", and a free-space block for the remainder of the storage space. Encoding of the text may be ASCII and encoding of the 2-byte lengths may be little-endian, in this example. However, actual encodings can be implementation-defined.

The general structure of the filesystem and the format of the files used is described in detail below. The following terms will be used in this description:
- STORAGE_SIZE is the total size of storage space used by the filesystem.
- LEN_SIZE is the number of bytes used to specify the size of a filesystem entry (LEN_SIZE is generally 2 bytes (16 bits), which may be used to specify a filesystem entry having a size of up to 65535 bits).
- Where sizeof(TYPE) is used to indicate a size, then it represents the number of bytes used to store the field or header called TYPE .
- KEY_SIZE is the length of any derived symmetric key, and is dependent on the chosen ciphersuite, i.e. the set of cryptographic algorithms used to perform the cryptographic operations such as encryption, authentication and key derivation.
- MAX(SIZE1, SIZE2) represents whichever is the greater value of szzE1 and SIZE2.
- A | B represents the concatenation of the bytes of A and B.

The filesystem comprises a single filesystem header, referred to here as FS_Header, followed by one or more variably-sized contiguous blocks referred to here as Entry_Block or entries. Entries may be a file, or simply free-space. A file may be in various states reflecting transactions and filesystem compaction operations. These states are described in detail below.

The format of FS_Header and Entry_Block is first described in the following sections.

### Format of FS Header

For this example, the filesystem header (FS_Header) starts at address '0' in the underlying storage medium. In some examples, the filesystem header may not be at the start of the physical storage address space, in which case, an implementation shall apply the appropriate transformation so that the local filesystem address is translated into the real physical address. The filesystem header may be prefixed by one or more implementation-defined identifying bytes to distinguish it from other filesystem types.

In this example, the filesystem header comprises the following fields contiguously in the listed order:

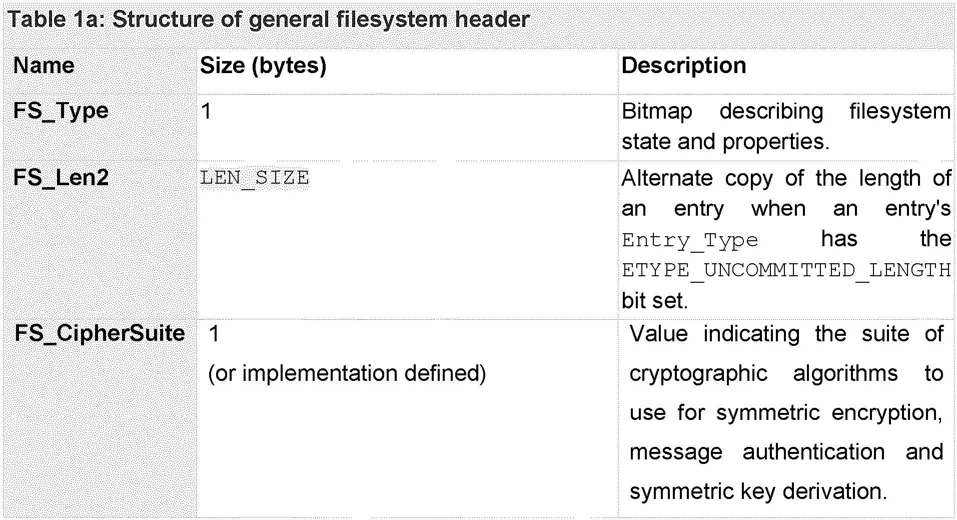

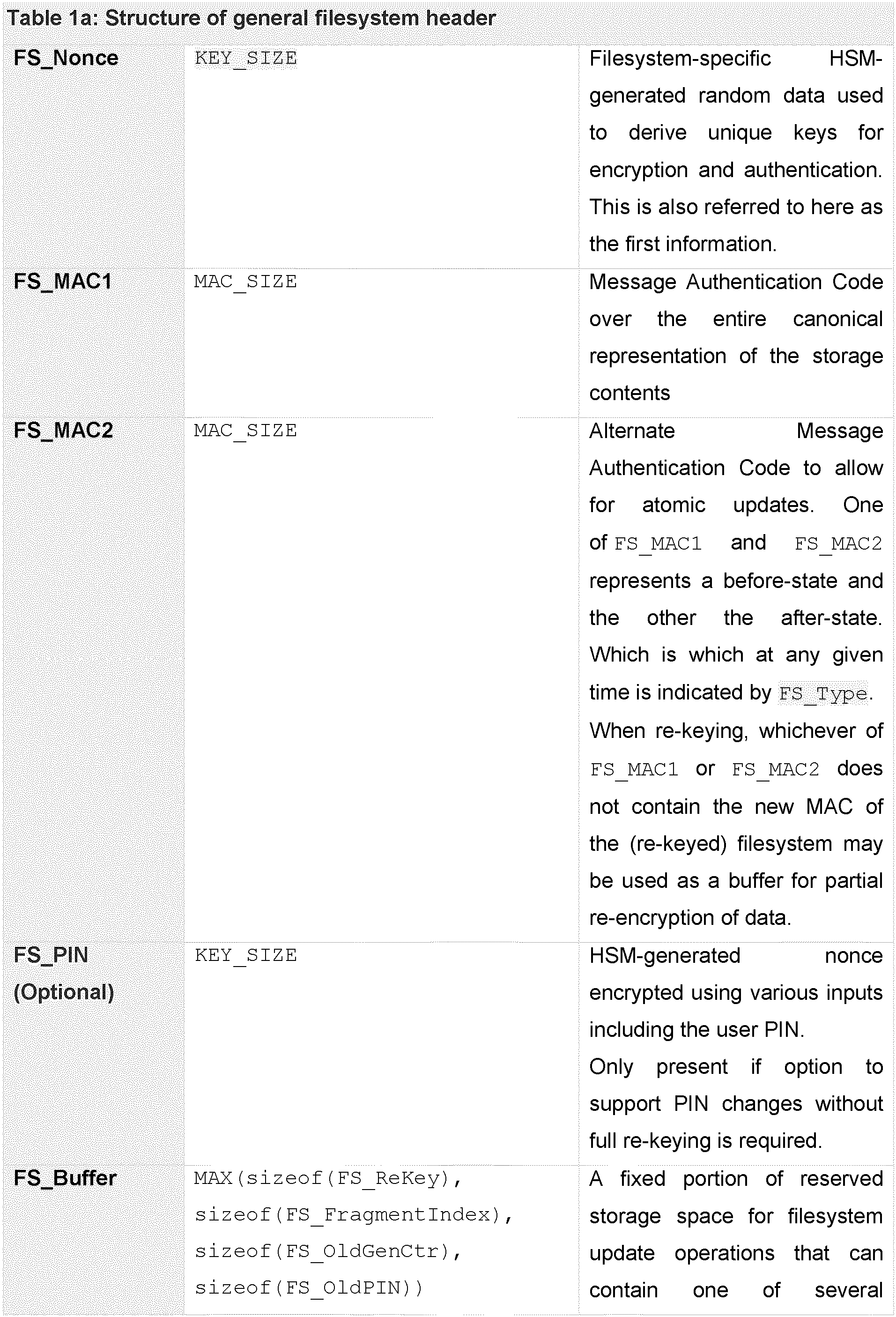

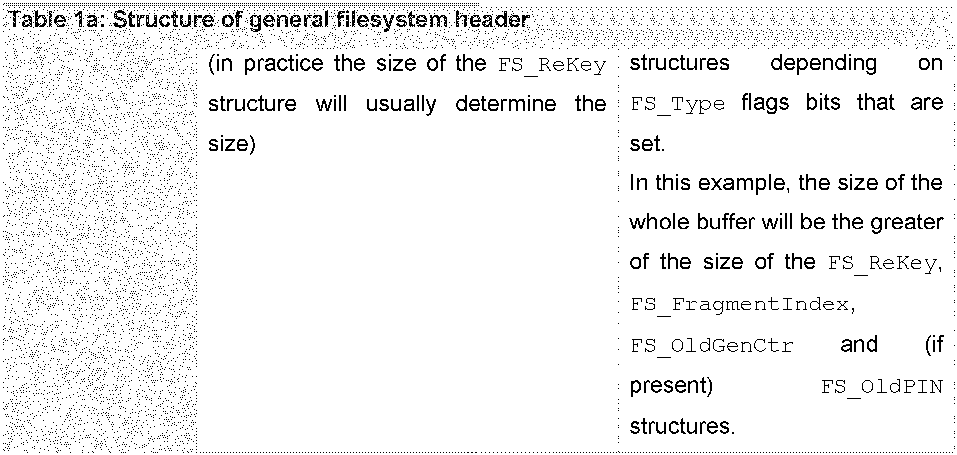

Authenticity is achieved by storing authentication information - in this example a MAC (Message Authentication Code) - that can be used to verify the entire state of the filesystem, i.e. it is per-filesystem and not per-file. There are two MAC fields present in the FS_Header (i.e. filesystem header): FS_MAC1 and FS_MAC2. When the filesystem is in a normal state (no transaction is in progress, so FSTYPE_DIRTY is not set), one of these fields contains the MAC of the current filesystem state, and the other is unused. When a transaction is in progress on the filesystem, one field contains the MAC of the filesystem before the transaction, and one contains the MAC of the filesystem after the transaction is complete. In this way it is possible to verify the filesystem if a transaction is interrupted, regardless of whether it is rolled-back or rolled-forward. The FS_MAC2 flag in FS_Type in the FS_Header can be set or unset to indicate which MAC represents the before-state and the after-state at any given time. In a committed (can be rolled-forward) state, or when FSTYPE_DIRTY is not set, then the MAC for the after-state is the MAC of the current state of the filesystem, and the alternate MAC is no longer relevant. MAC_SIZE is the length of the MAC (Message Authentication Code) and is dependent on the chosen ciphersuite.

The FS_Type byte in this example has the following structure, consisting of 8 bits:

| **Table 1b: Structure of 'FS_Type' byte of Table 1a** | | | | | | | | |
|---|---|---|---|---|---|---|---|---|
| **BIT Offset** | **7** | **6** | **5** | **4** | **3** | **2** | **1** | **0** |
| **Use** | Reserved | Bit flags | | | | | | Format Flag |

The following type codes, and the corresponding bit flags (hexadecimal values in the 'Value' column) which may be used to represent them, are defined below. The bit flags below therefore correspond to the flags which may be used in 'BIT Offset' 5 and 6 in the table above describing the FS_Type structure. The stated bit values are provided as examples. The flags FSTYPE_OLD_PIN, FSTYPE_OLD_GENCTR, and FSTYPE_REKEY support fail-safe updates in the cryptographic extensions.

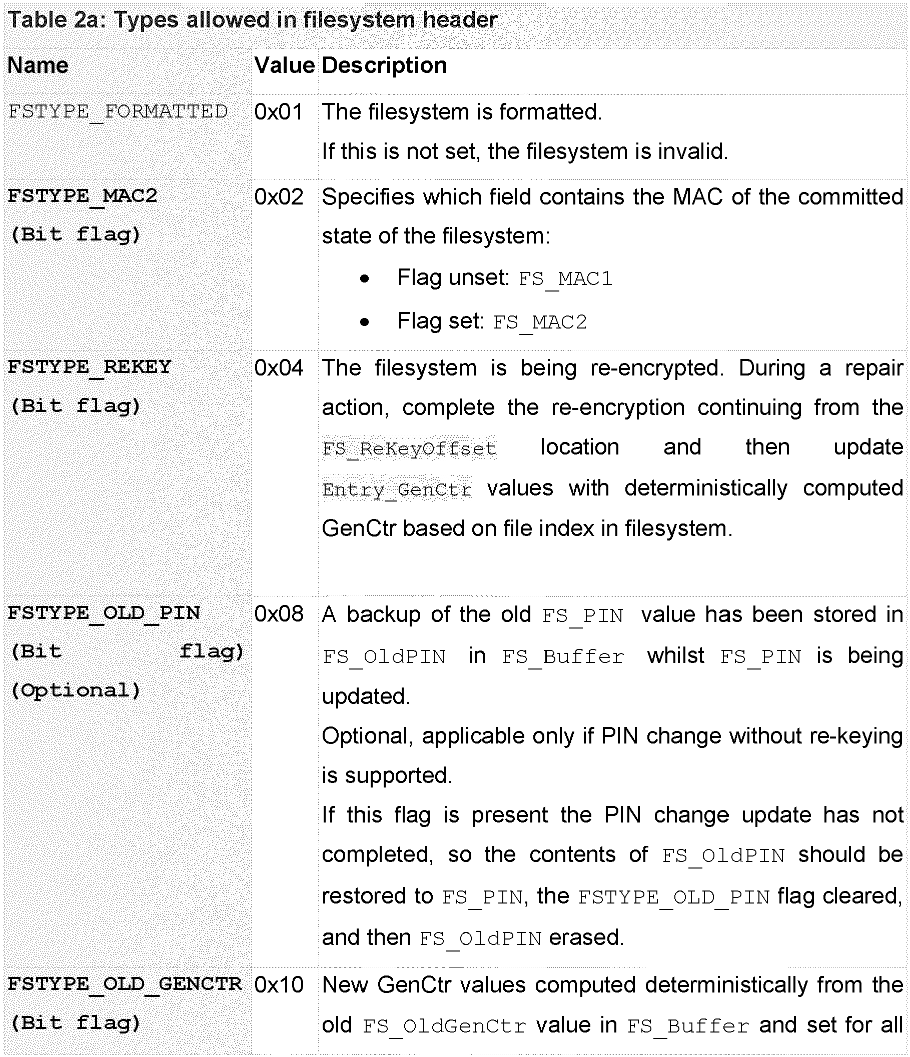

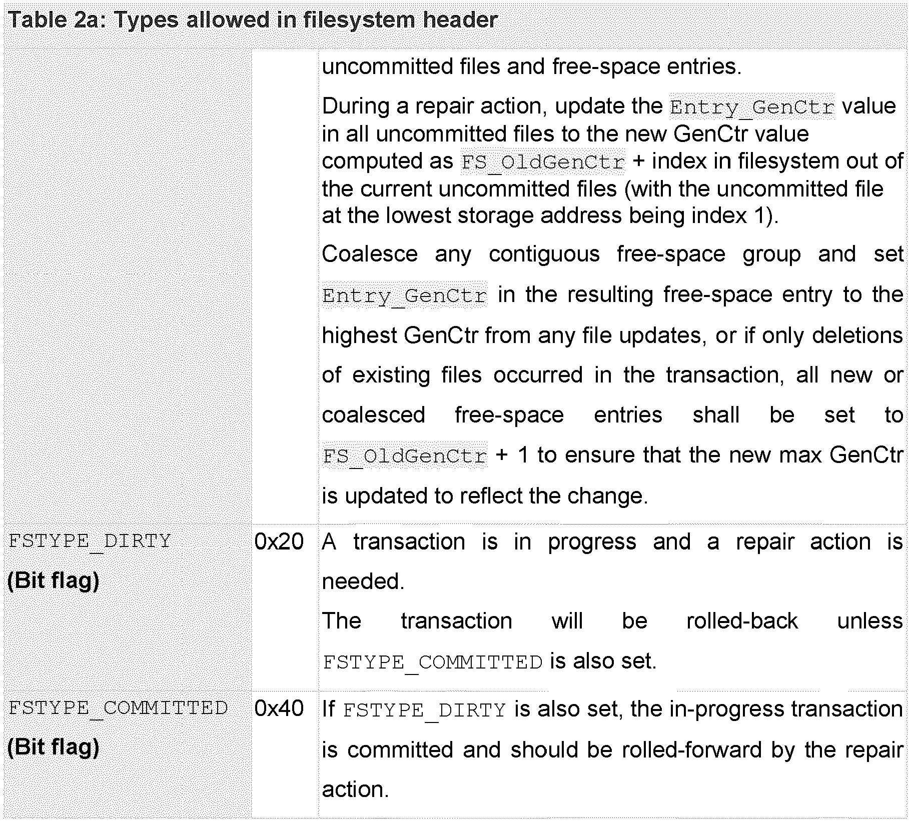

In greater detail, if only the FSTYPE_DIRTY flag is set, if an interruption were to occur during a transaction, the progress of the transaction would be 'rolled-back' to revert to the original state of the file system upon resumption. If both the FSTYPE_DIRTY and the FSTYPE_COMMITTED flag are set, upon resumption of an interrupted transaction, the progress of the transaction would be continued and the transaction would be completed, i.e., 'rolled-forward'.

In this example, FS_Buffer can be used to store one of the following (where one of the following is stored at a time):
- a FS_FragmentIndex as described below;
- a FS_ReKey structure as described below;
- FS_OldGenCtr which is a single field containing a backup of the highest Entry_GenCtr value in the filesystem prior to the currently in-progress transaction; or
- FS_OldPIN (if PIN change without re-keying is supported) which is a single field containing old PIN.

The FS_FragmentIndex is an index that is used during a filesystem compaction procedure. An example filesystem compaction procedure using such an index is described in PCT/GB2021/050851, the entire contents of which is incorporated by reference herein.

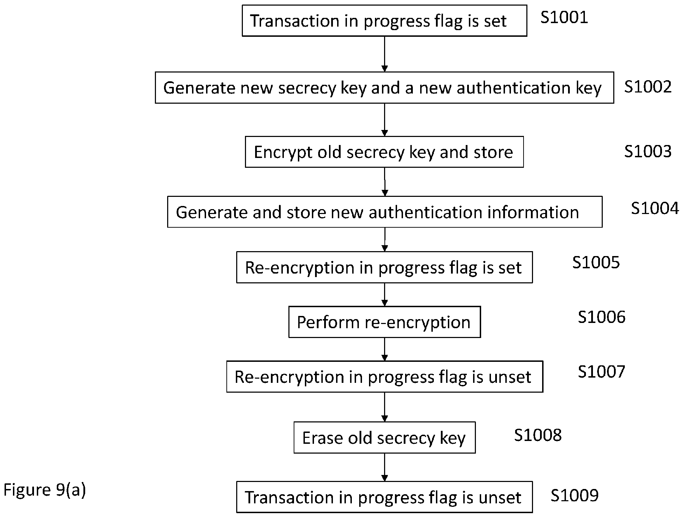

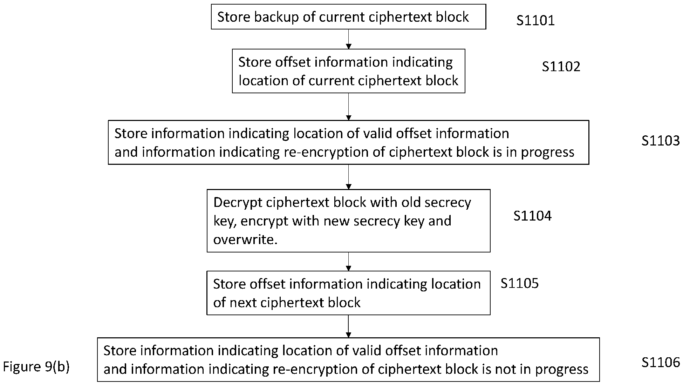

The FS_ReKey structure comprises the following information, which is extra information used when a re-key operation is in progress. An example re-key operation will be described in further detail below in relation to Figure 9.

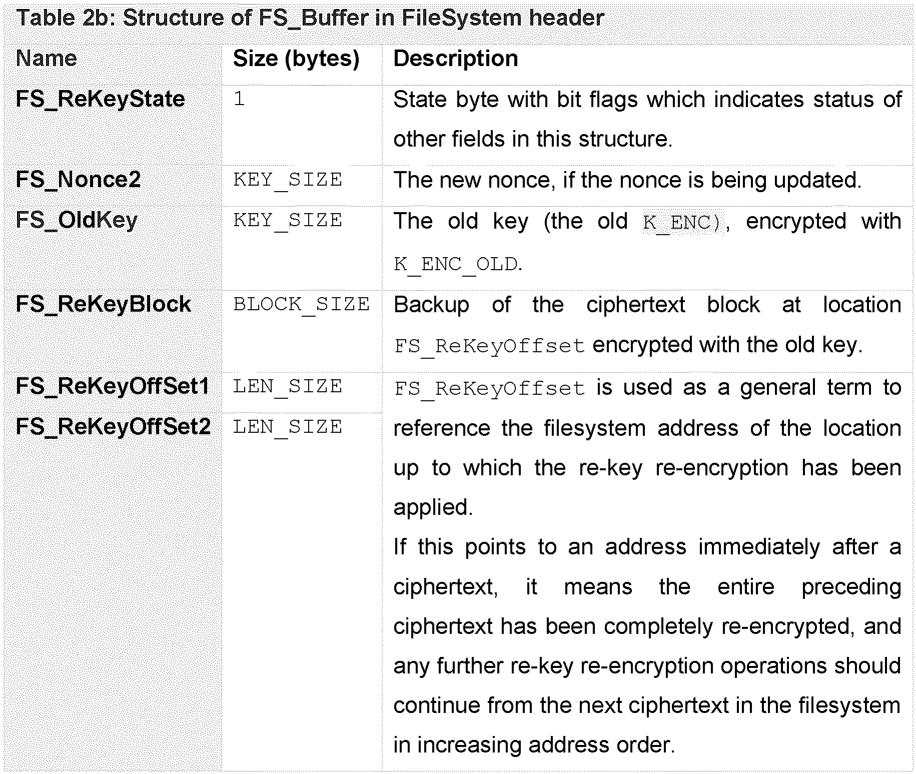

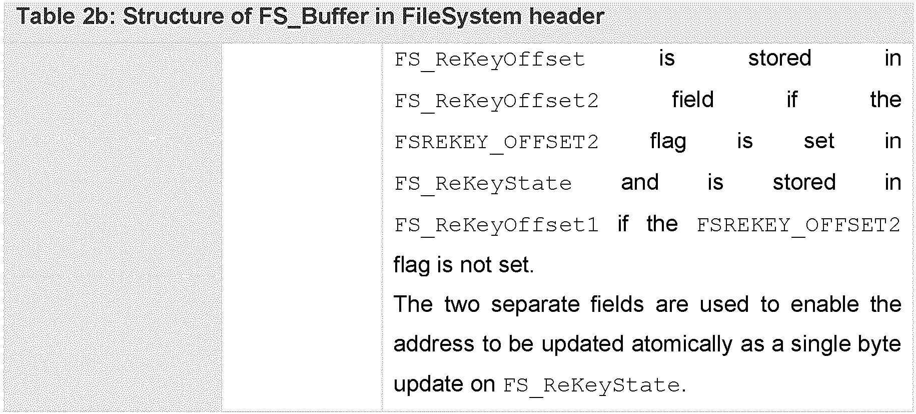

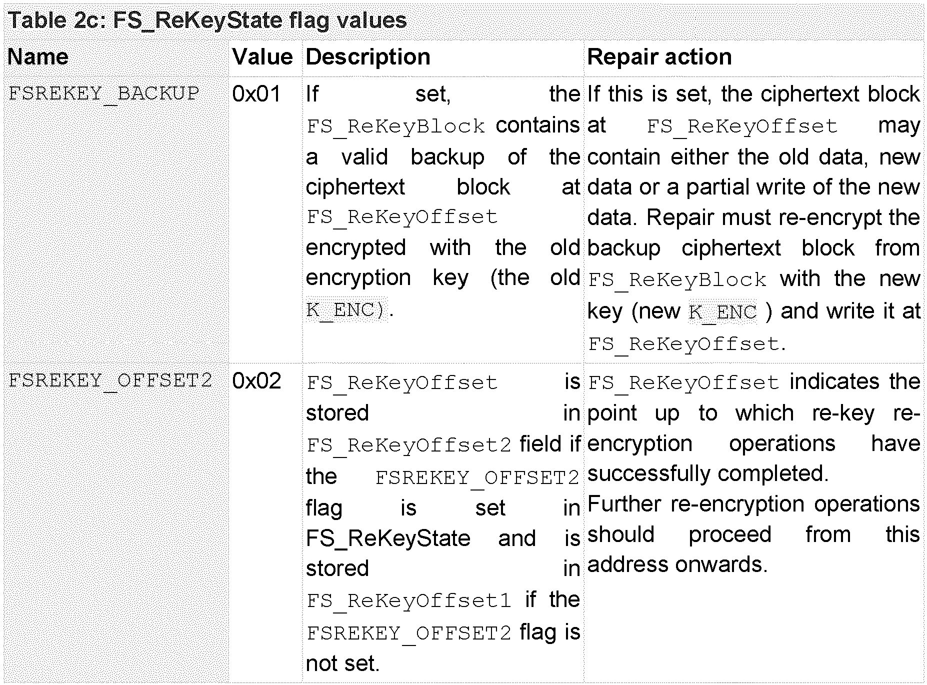

It will be understood that the values above are merely for illustration and consistency within the present disclosure, however, other suitable sets of values could be used by a different example implementation.

### Format of 'Entry_Block'

In the address space following the Filesystem Header (FS_Header), the filesystem generally comprises one or more Entry_Block filesystem entries (e.g. data files). Filesystem entries may comprise any of: a single padding byte, a free-space block, a file, and the like. The header of individual entries may be modified in various different scenarios. Updating of entry headers is described in PCT/GB2021/050851, the entire contents of which is incorporated by reference herein.

| **Table 3a: Example structure of a filesystem entry** | | | |
|---|---|---|---|
| **Name** | **Size (bytes)** | **Applicable Entry_Type types** | **Description** |
| **Entry_Type** | 1 | All types | Describes type and state of entry. |
| **Entry_Len** | LEN_SIZE, typically 2 bytes in the format of: len_lo \| len_hi | All except ETYPE_PADBYTE: | Total length of the Entry_Block including all header fields. |
| | | This field is absent if Entry_Type is ETYPE_PADBYTE | The len_lo and len_hi bytes define the total length of the record (len_lo is the least significant byte, len_hi is the most significant byte; the total length of the Block, including the header is therefore len_lo + 256 * len_hi). |
| **Entry_GenCtr** | 2 (or implementation defined) | All except ETYPE_PADBYTE | The generation counter of the operation which created this block. |
| | | | For small storage areas with relatively few files used to store secret material that will not change that often, 2 bytes is the set length. However, this could be extended to additional bytes if an implementation were to allow more updates before replacing the filesystem nonce, or even be reduced to a single byte if it is known that there will be a small number of files and changes will be rare. |
| | | | Note: this field is absent if Entry_Type is ETYPE_PADBYTE |
| **Entry_NameLen** | 1 (or implementation defined) | All except ETYPE_PADBYTE and ETYPE_FREESPACE | Length of filename. Filenames must be non-empty, so 0 represents a length of 1 and 0xFF a filename of length 256 in order to make use of the full range of possible values for the byte. |
| | | | Add 1 to the Entry_NameLen value to get the actual length of Entry_Name. |
| | | | An implementation could choose to use additional bytes for the filename length to permit longer filenames. |
| **Entry_Name** | Entry_NameLen | All except ETYPE_PADBYTE and ETYPE_FREESPACE | The filename. |
| | | | The filesystem imposes no restrictions on the values of bytes used in the name, e.g. zero values are permitted. |
| | | | An implementation could choose to impose restrictions on the permitted filenames. |
| **Entry_Content** | All remaining space in the entry after all other header fields above. | All except ETYPE_PADBYTE | For a free-space block, the content is undefined but will usually be all zeroes. |
| | | | For a file, this is the file content (which may be of zero length). No length limit is imposed on file content except for that implicitly imposed by the remaining available addressable storage space. |
| | | | An implementation may choose to implement additional structure within the Entry_Content in order to implement implementation-specific features such as Access Control Lists. |

The file content may comprise cryptographic key material, for example one or more cryptographic keys, material that may be used to derive a cryptographic key, key information such as a key share. For example, the file content may comprise key material relating to application keys associated with a client or administrator keys associated with a client.

In respect of the "Entry_Len" name above, it will be understood that the present filesystem is particularly suitable for use in very small-capacity storage areas (for example, less than 64 KB), thus 2 bytes is a generally sufficient length. Nevertheless, it will be generally understood that any suitable number of bytes may be used, i.e., to define a longer entry. Thus, the Entry_Len can be extended to additional bytes if needed, with corresponding updates to Block lengths when stored elsewhere. Merely for example, a third byte len_mid may be used, in which case the total length of the Block including the header length may be calculated as: len_lo + (25 6 * len_mid) + (65536 * len_hi).

The Entry_Type byte may be defined as follows:

| **Table 3b: Structure of the Entry_Type byte of table 3a** | | | | | | | | |
|---|---|---|---|---|---|---|---|---|
| **BIT Offset** | **7** | **6** | **5** | **4** | **3** | **2** | **1** | **0** |
| **Use** | Bit flags | | Reserved | | | Type of entry | | |

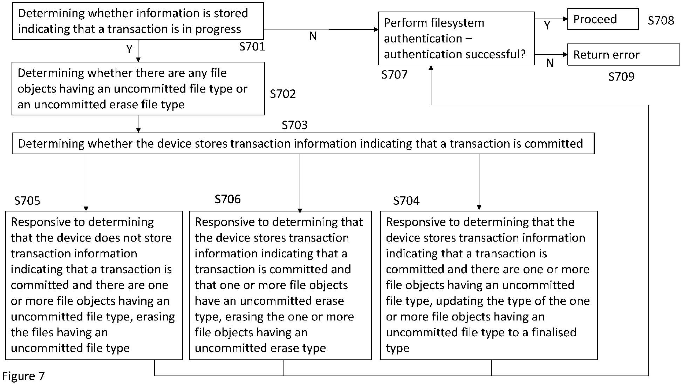

Examples of type codes, corresponding to different types of entries, are defined below. The repair actions associated with various type codes are also listed in the table below. The repair actions are performed when performing an access operation on the device, and will be described in more detail in relation to Figure 7 below. It will be understood that the values (i.e. the bit flags given in hexadecimal) are for illustration and other suitable values could be used by an implementation.

| **Table 4: Types of Entries** | | | |
|---|---|---|---|
| **Name** | **Value** | **Description** | **Repair action** |
| **Table 4: Types of Entries** | | | |
| ETYPE_PADBYTE | 0x01 | Pad byte. Used to fill gaps between entries and at the end of storage that are too small for a free space block. | |
| ETYPE_FREESPACE | 0x02 | Free space block. | - |
| ETYPE_FILE | 0x03 | File | - |
| ETYPE_UNCOMMITT ED_FILE | 0x04 | Possibly uncommitted new file | If the transaction is not committed, erase this entry. |
| | | | If the transaction is committed, change to ETYPE_FILE type. |
| ETYPE_UNCOMMITT ED_ERASE | 0x05 | File that is to be erased | If the transaction is not committed, change to ETYPE_FILE type. |
| | | | If the transaction is committed, erase this entry. |
| ETYPE_UNCOMMITT ED_FREESPACE | 0x06 | Free space that may not have been securely zeroed yet, and/or may not have been coalesced with surrounding ETYPE_FREESPACE entries | Zero the contents of the Entry_Block after the Entry_Len field, then coalesce the block with any surrounding ETYPE_FREESPACE entries if applicable and ensure that the Entry_Type is updated to ETYPE_FREESPACE. |
| ETYPE_FRAGMENT | 0x07 | The file data is fragmented into 2 chunks with a gap between them during a compaction operation. | Using state information in the FS_FragmentIndex, |
| | | | continue compaction process. Ultimately this entry becomes a file entry. |
| | | | If more than one ETYPE_FRAGMENT is present, the filesystem is considered corrupt. |
| ETYPE_FRAGMOVED 1 | 0x40 | If the Entry_Type is that of ETYPE_FRAGMENT: this bit flag indicates that the length of data moved so far is stored in FS_FragMoved1, and if the bit flag is not set, the length of data moved so far is stored in | Using state information in the FS_Fragment Index, continue compaction process. |
| **(Bit flag)** | | | |
| | | FS_FragMoved0. | |
| ETYPE_UNCOMMITTED_LENGTH | 0x80 | Safe updating of the length (Entry_Len) of an Entry_Block is achieved by having the new length initially stored in FS_Len2, before the Entry_Len value is updated. The Entry_Type bit flag ETYPE_UNCOMMITTED_ LENGTH is subsequently set, which indicates that the implementation should look in FS_Len2 for the length, rather than in Entry_Len. Once the Entry_Len location is updated with the new length, the Entry_Type is updated again to no longer have the ETYPE_UNCOMMITTED_ LENGTH flag set. | The flag may be set only on ETYPE_FREESPACE, ETYPE_UNCOMMITTED_FREESP ACE, or ETYPE_FRAGMENT, otherwise the filesystem is considered corrupt. |
| **(Bit flag)** | | | |
| | | | Copy FS_Len2 into Entry_Len then clear this bit flag, then take any further repair action based on new value. |
| | | This flag thus indicates that the length of this entry is stored in FS_Len2 in the FS_Header and the value in Entry_Len should be ignored. | |
| | | The entry should otherwise be considered to be equivalent to an entry without the flag set. | |

In the example described here, the new length is stored in FS_Len2 in the filesystem header. However, in alternative examples, the new length is stored in space reserved in the block header for example. The new length may be stored in any method in which the block is resized, for example when compacting the filesystem.

A set of interfaces for reading and writing to the filesystem are provided. It will generally be understood that an 'interface' refers to code functions, e.g. stored in HSM firmware code, that implement any of the algorithm described in detail below. These provide the interface for code that needs to read/write files in the filesystem to make use of the below described functionality, i.e. they provide a library of functions for other code to use. Various details can be tailored to the needs of the user of the filesystem. The general aspects of the interfaces for e.g.: writing or overwriting files, erasing files, formatting the filesystem, listing files, reading files, implementing filesystem transactions, performing updates to files, enumerating the contents of the filesystem, and reading files are described in PCT/GB2021/050851, the entire contents of which is incorporated by reference herein.

In an example, the filesystem itself does not implement any access controls on files, and does not perform locking for concurrent access to the same storage device (alternatively, the scheme specified above for "shared" and "exclusive" locks, held on the storage device by the interface implementations, may be used). These are both the responsibility of the user of the filesystem. The algorithms/interfaces are configured to assume that no changes are being made to the storage by any other code or devices whilst they are executing.

In particular, locking for reads and writes may be the responsibility of the user of the filesystem, the filesystem itself is not re-entrant on a particular device. It is assumed that the contents of storage will not change except for any changes that the algorithms themselves make during the period they execute. Multiple reads may actually occur concurrently without interfering with each other, but must be mutually exclusive with any writes. Writes are mutually exclusive with any other writes. Alternatively, the implementation may specify its own locking structure for reads and writes, e.g. to ensure that parallel write operation do not clobber one another. This can be done as follows. In general, all reads would acquire a "shared" lock on the specific storage device being operated on (that can operate concurrently with any other "shared" locks but waits if there is an "exclusive" lock currently held). All write operations would acquire an "exclusive" lock that prevents any other reads or writes, and waits until all "shared" and "exclusive" locks are released before continuing. Exclusive lock would generally be held on the storage device by the following interfaces for the entirety of their implementation for example: Tknfs_Transact; Tknfs_CreateFile; and Tknfs_EraseFile. Shared lock would generally be held on the storage device by the Tknfs_ReadFile interface for example for the entirety of its implementation. Generally, it is assumed that the underpinning storage system writes individual bytes atomically, and the ordering between writes is preserved. Additionally, no assumption is made on the order of writing multiple bytes in a single write operation. If a storage system without this characteristic is used, the fail-safety will be reduced.

Consistent with the example structures of the filesystem entries and filesystem headers described above, we herein describe the following example algorithms, and methods for interfacing with the filesystem. The methods may be implemented on a device such as has been described above, for example a HSM device 21, in relation to a filesystem stored in local HSM storage 305, a local smart card storage 30 or a remote smartcard storage 29 for example.

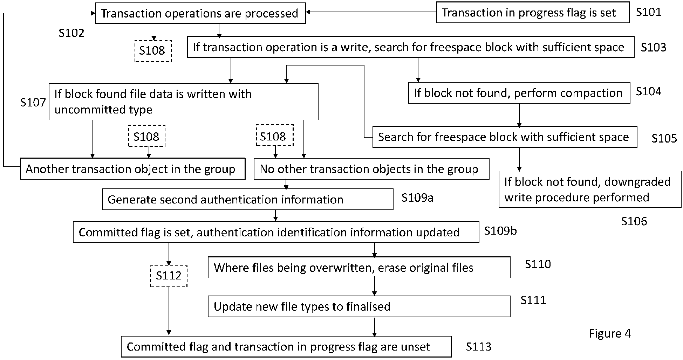

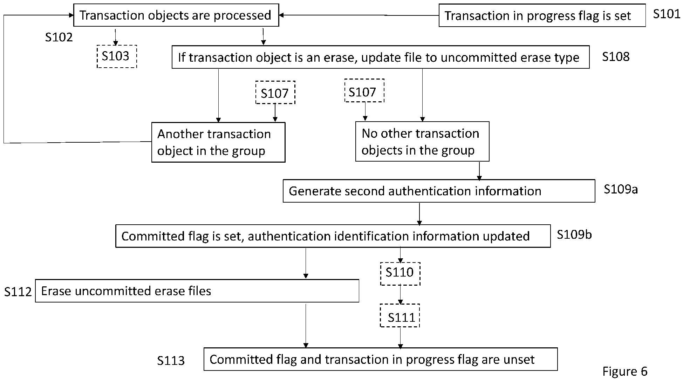

In particular, Figure 4 is a flowchart showing a method of performing a file transaction in accordance with an example, where the transaction instruction comprises one or more write transaction operations. Figure 6 is a flowchart showing a method of performing a transaction in accordance with an example, where the transaction instruction comprises one or more erase transaction operations. Figure 7 is a flowchart showing a method of performing an access operation in accordance with an example.

A change performed on the filesystem is generally referred to as a transaction. A transaction can comprise one or more operations selected from the group of: write, overwrite, and erase for example. Overwrite is described here as particular type of write transaction operation. Thus when the term "write transaction operation" is used in the following description, it is understood that this may include an overwrite transaction operation. It will nevertheless be understood that an 'overwrite' as described below may comprise a write operation followed by an erasure of the (pre-existing) duplicate file which is to be overwritten. In this way, a copy of either the pre-existing or new file is always present, such that the filesystem can be safely rolled-forward or rolled-backwards to either the intended final state, or the original state of the filesystem. In certain examples (e.g., where sufficient space does not exist to hold redundant copies of file entries), the file to be overwritten may be erased first.

When a transaction is initiated (e.g., by a HSM), a transaction instruction, comprising one or more transaction objects as described below, is provided (by the HSM 21). Each transaction object specifies a transaction operation, and (in the case of a write or overwrite) the corresponding information to be written. The data structure used for the transaction objects is described below. The objects, which collectively form the transaction instruction, are called TKNFS_FILE_CONTENT objects, and are used to store information about a file change. The TKNFS_FILE_CONTENT object relates to a transaction operation to write a file on the device (i.e. when the TKNFS_OPERATION field specifies the type of transaction operation as TKNFS_CREATE or TKNFS_OVERWRITE described below) or a transaction operation to erase a file from the device (i.e. when TKNFS_ERASE is specified).

Alternative structures suitable for describing the object will be readily apparent to the skilled person. However, an example structure of the TKNFS_FILE_CONTENT object is shown below, comprising three sections:

| **Table 5: Structure of transaction object** | |
|---|---|
| **Name** | **Description** |
| TKNFS_OPERATION | This field specifies the type of transaction operation, chosen from any one of: |
| | • TKNFS_CREATE : Create a new file named TKNFS_FILENAME |
| | • TKNFS_OVERWRITE : A pre-existing file with the same file name (TKNFS_FILENAME) is to be overwritten (i.e. replaced) |
| | • TKNFS_ERASE : A pre-existing file with name TKNFS_FILENAME is to be erased |
| TKNFS_FILENAME | An array of bytes at least 1 byte long (up to the maximum length that can be stored in Entry_NameLen), which specifies the file name to be stored in Entry_Name (if TKNFS_CREATE or TKNFS_OVERWRITE is the specified transaction) or the file name to be erased (if TKNFS_ERASE is the specified transaction). |
| TKNFS_DATA | This field is optional. For example, this field will be empty if TKNFS_ERASE is the specified transaction operation of the file object. |
| | Generally, this field may comprise an array of 0 or more bytes specifying the file data. |

The TKNFS_FILENAME corresponds to identification information for the file to be written or erased.

A process for performing a sequence of changes applied to the filesystem when performing a set of one or more transactions is performed as described below.
i. The FSTYPE_DIRTY flag is set in FS_Type to indicate that a transaction is in progress.
ii. The transaction changes are written as uncommitted.
iii. A new MAC is computed and stored in the after-state FS_MAC location. → (Up to this point, after an interruption to the transaction, a repair action will result in rolling the filesystem *back to* the original state).
iv. The FSTYPE_COMMITTED flag is set in FS_Type to indicate the transaction has been committed (i.e. fully written) and the FS_MAC2 flag in FS_Type is updated to point to the after-state FS_MAC location. The two flags are set atomically, i.e., as a single 1-byte write operation.
   → (From this point onwards, after an interruption to the transaction, a repair action will result in rolling the filesystem *forward* to the intended final state).
v. The transaction changes are rolled forward.
vi. The FSTYPE_DIRTY and FSTYPE_COMMITTED flags are unset in FS_Type.
   Advantageously, the two flags are unset atomically, i.e., as a single 1-byte write operation.

It will be understood that the FSTYPE_DIRTY flag set in i) gives no indication as to progress of a write/erase operation; rather, it indicates that the transaction as a whole has begun but is not complete. The inclusion of the FSTYPE_DIRTY flag allows a repair action to avoid performing subsequent checks (for example, whether the transaction is committed) in cases where no file transaction has been interrupted. Thus if the FSTYPE_DIRTY flag is not set when an access operation is commenced, further checks need not be performed. In some alternative examples, the feature of the FSTYPE_DIRTY flag is not included.

Use of a committed flag provides a single check as to whether a transaction is committed. Setting the committed flag corresponds to storing transaction information on the device indicating that a transaction is committed. Alternatively, this could be represented by updating individual files to committed types for example.

After step iii), and before step iv), since the FSTYPE_DIRTY flag is in the general filesystem header but the FSTYPE_COMMITTED flag is not set, the transaction will not yet be considered committed. Therefore, any recovery of the filesystem in this state will roll-back the transaction. Following step iv), any recovery of the filesystem in this state will roll-forward the transaction, indicated by the FSTYPE_COMMITTED type in the general filesystem header. In step iv), the two flags are set atomically, i.e., as a single 1-byte write operation. Advantageously, in step vi), the two flags are unset atomically, i.e., as a single 1-byte write operation.

No writes are made to the filesystem until all the changes for the transaction are known. This may be achieved by an API for the filesystem implementation taking the full set of files to write or update. More generally, a BEGIN/COMMIT transaction wrapper may be included around a sequence of file transaction, where all of the tracking of the changes is done in main memory and only when the transaction is COMMITed do the writes happen to the filesystem, at which point all the files to update would already be known.

The specific interface available to interact with the contents in this case is Tknfs_Transact. This interface creates, overwrites and/or erases one or more files as a single transaction. A single transaction instruction can include transaction operations having each of a write, overwrite, and erase function, and therefore all three types of operations can be done simultaneously with transaction safety. Each of the write, overwrite, and erase operations will either roll-forward (to the intended final state) or roll-backward (to the initial filesystem state) during a repair action, following an interruption to the file transaction.

An array of TKNFS_FILE_CONTENT (as described above in Table 5) objects are passed to specify the parameters for each file. This array corresponds to a transaction instruction. Each object specifies the file name and flags to indicate any one of:
- a new file (TKNFS _CREATE); or
- a file that may overwrite an existing one with the same file name (TKNFS_OVERWRITE); or
- that a file with that file name should be erased (TKNFS_ERASE).

The file contents comprised in TKNFS_DATA (see Table 5 above) for new or overwrite files are generally provided as an opaque byte-block. The specific user implementation, i.e. which may be further defined by the user of the filesystem, may optionally implement an additional structure within said opaque byteblock for new/overwrite files.

### Write transaction

A method of performing a file transaction on a device will now be described in relation to Figure 4. Figure 4 is a flowchart showing a method of performing a file transaction on a device in accordance with an example.

A transaction instruction to perform a set of one or more transaction operations on the device is provided by the HSM. The transaction instruction may be generated at the HSM device 21 in response to a command received by a user. The transaction instruction comprises one or more transaction objects as described in Table 5 above, each specifying a transaction operation to be performed. These operations correspond to those specified in the user command. Various interfaces may be provided to generate the transaction objects corresponding to the requests in a received user command, as will be apparent to the skilled person.

For example, a user may connect a smartcard storing a filesystem to a HSM device 21 in a manner such as has been described in relation to Figure 2(a) or 2(b) above (either locally or remotely). The user may then send a command to the HSM device 21 comprising transaction information, for example, requesting that a new file be written to the smart card or that a file on the smart card be updated with an overwrite transaction. The HSM device 21 generates a transaction instruction in response to the user command.

As has been described above, prior to the transaction being performed, the filesystem header comprises stored first authentication information corresponding to the filesystem. In particular, in this example, a MAC is located in one of FS_MAC1 and FS_MAC2. The filesystem also comprises stored authentication identification information indicating the location (FS_MAC1 or FS_MAC2) that stores the valid authentication information, i.e. that currently stores the relevant information. The authentication identification information in this example is the file system type FS_Type, i.e. the FS_MAC2 flag, described above.

Optionally, prior to performing S101, a step of authenticating the filesystem is automatically performed by the device. A method of authenticating the filesystem is described in relation to Figure 8 below. The step of authenticating the filesystem may be performed as part of the filesystem checks described in relation to Figure 7 below for example. Alternatively, in some implementations, an authentication is performed once when the storage is connected, and is not then performed for each operation.

In S101, before making any other changes to the storage, FS_Type is updated to set the FSTYPE_DIRTY flag to indicate that a transaction is in progress. The FSTYPE_DIRTY flag is also referred to as a progress flag, and it indicates a file transaction is in progress.

Optionally, all file parameters are validated up-front before making any changes to the file system. This validation may include checking that there is enough space for all content. In other words, this comprises determining whether a size of all files to be written exceeds an available storage on the device. This step may further comprise checking that an attempt is not being made to replace an existing file unless the TKFNS_OVERWRITE flag is set.

A first transaction operation specified by a first transaction object in the transaction instruction is processed in S102. The steps performed responsive to determining that the transaction operation is a write in S102 are shown in full Figure 4. Other steps of the method which are more relevant to 'erase' transaction operations (some of which are indicated by dashed boxed in Figure 4) are shown in full separately in Figure 6 for clarity. Write transaction operation objects have the structure shown in Table 5 above, where TKNFS_CREATE or TKNFS_OVERWRITE is specified. Each write transaction operation object in the transaction instruction corresponds to a file object. The 'write' transaction operation objects in the transaction instruction collectively relate to a first file group comprising at least one file object. The first file group comprises all the file objects to be written to the device, wherein the file objects in the first file group collectively have a first size, and wherein each of the file objects comprises identification information, namely the filenames.

In S103, the filesystem is searched for a free space block with sufficient space to write the file object corresponding to the write transaction operation. To write (and overwrite) a file, a method of enumerating the file system may be performed to look for a suitable record containing free space. An example method of enumerating the file system is described in PCT/GB2021/050851, the entire contents of which is incorporated by reference herein. In some examples, the full `walk' of the filesystem may not be necessary; i.e., results of a previous filesystem enumeration may be stored in a cache for quick access. A best-fit algorithm is performed, in which the whole device storage space is searched. A freespace block with the least excess space is picked; preferably, a freespace block is chosen having a size that does not require (unusable) padding bytes to be written.

Optionally, any new file is written (i.e. any file in the group of file objects which has a TKNFS_CREATE or TKNFS_OVERWRITE flag) to a gap between two existing files only if the file size matches the gap size exactly, or if the remainder (between file size matches and gap size) is at least large enough for a free-space entry. In this way, padding bytes can be avoided. Only if there is no other available space, padding bytes may be written. This has the advantage of ensuring that unusable and non-compactable padding bytes are unlikely to be generated. Writing new files in this manner makes it less likely that unusably small spaces that can't be safely compacted will arise.

If no such freespace block exists, the entire device is compacted in S104. In one example, compaction involves (starting at the beginning of the storage area) moving files 'backwards' (i.e., to earlier address space) so that all gaps between existing entries are removed. Gaps between file entries may comprise free space or padding bytes, for example. After the existing entries have been moved, a new freespace record is created, which contains all the available storage in a single block. For example, if all existing files are moved backwards to the 'front' of the storage space, the single freespace block will be created at the 'end' of the storage space. Compaction of the filesystem occurs if a suitably sized gap between two existing files cannot be found. Compaction is generally preferable to writing a new file in a gap that is larger than a size of the new file (but where said gap is too small for both the new file and a free-space entry), as this avoids writing padding bytes.

After completion of compaction, the search (i.e. the enumeration) for a suitable record containing free space is repeated in S105. Repetition of the compaction/enumeration ensures that file creation will always succeed if it is physically possible - i.e., if there is physically sufficient free space available.

Following compaction, if there is still not enough space, then a downgraded procedure may be followed in S106. An example downgraded procedure is described in PCT/GB2021/050851, the entire contents of which is incorporated by reference herein. This may comprise existing file entries to be overwritten being erased before the new file is written. This results in a downgrade of the transaction-safety behaviour. Following the erasure of the file to be overwritten, a search for free space is repeated, compacting again if necessary.

When the allocation has succeeded, the file data specified in the TKNFS_FILE_CONTENT file object is written, and the header at the start of the free space record is rewritten to reflect the new file in S107. The Entry_Type byte of the new file is written as ETYPE_UNCOMMITTED_FILE. If the allocated free space block is longer than required, a new free space record is created at the end of the new file. Optionally, if there isn't enough space for a free space record, a block of pad bytes is written instead.

In S107, the new file objects are created with an ETYPE_UNCOMMITTED_FILE Entry_Type. If the TKNFS_OVERWRITE flag is set in the file object, the name of the file object will be shared with a name of an original/pre-existing file in the filesystem. Original files of the same name are left unmodified at this stage.

If further transaction operations are to be processed, the method returns to S102, and the next transaction object is processed.

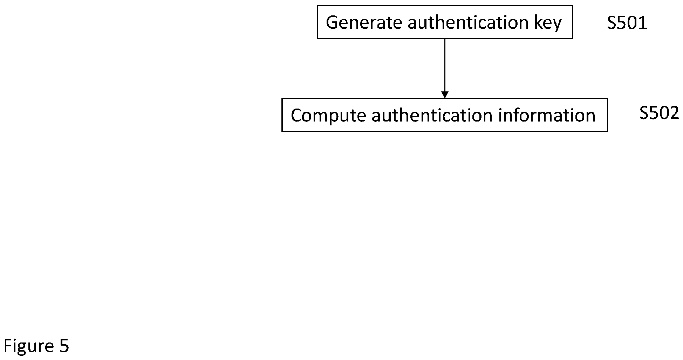

In response to all new file entries having been written, and all the Entry_Type of files to be erased having been updated to ETYPE_UNCOMMITTED_ERASE (as will be described in relation to the procedure for any erase transactions shown in Figure 6 below), second authentication information corresponding to the finalized filesystem state is generated and stored in S109a. In this example, a MAC is computed and stored in the alternate location i.e. the one of FS_MAC1 and FS_MAC2 that is not indicated by the FS_Type information (in particular, by the authentication identification information, i.e. the FS_MAC2 flag in this example) to store the valid authentication information - in other words the unused location. An example method of generating a MAC for the filesystem is illustrated in Figure 5 and described in more detail below.

The transaction is then flagged as committed by setting the FS_Type to the FSTYPE_COMMITTED flag and the authentication identification information updated in S109b. The FSTYPE_COMMITTED flag is an example of information indicating that a transaction is committed. In this step, the authentication identification information is also updated to indicate the location of the valid authentication information. In this example, the FS_MAC2 flag in FS_Type is updated to indicate the other of FS_MAC1 and FS_MAC2. Thus if prior to S109a, the FS_MAC2 flag in FS_Type indicates FS_MAC1 as the location of the valid authentication, the new authentication information is written to FS_MAC2 in S109a, and the FS_MAC2 flag in FS_Type is updated to indicate FS_MAC2 as the location of the valid authentication information in S109b. If prior to S109a, the FS_MAC2 flag in FS_Type indicates FS_MAC2 as the location of the valid authentication, the new authentication information is written to FS_MAC1 in S109a, and the FS_MAC2 flag in FS_Type is updated to indicate FS_MAC1 as the location of the valid authentication information in S109b. As the alternate MAC represents the one that is not yet committed, when the FSTYPE_COMMITTED flag is set in FS_Type, the FS_MAC2 flag in FS_Type which indicates which of the two MAC storage locations represents the committed one is updated at the same time so that this is an atomic switch from one to the other. Therefore changing the flag to indicate which MAC is the committed MAC is a part of step S109b.

Optionally, after FS_Type is updated to set the FSTYPE_COMMITTED flag, the old MAC may be erased. For example, if the new authentication information is written to FS_MAC2 in S109a, the data stored at FS_MAC1 may be erased. If the new authentication information is written to FS_MAC1 in S109a, the data stored at FS_MAC2 may be erased. This may provide improved security, for example by preventing use of the old MAC to determine whether specific previous content was stored.

Where files are being overwritten, the original files with the same filename are then erased as per the safe erasure algorithm (which will be described in detail further below) in S110.

In step S111, following the FSTYPE_COMMITTED flag being set in the general filesystem header, the Entry_Type on the newly written files is changed from ETYPE_UNCOMMITTED_FILE to ETYPE_FILE. This is also referred to as a finalised type.

Finally, in S113, the FS_Type in the general filesystem header is updated to clear both the FSTYPE_COMMITTED and FSTYPE_DIRTY flags.

In this manner, changes to a filesystem are made in such a way that, wherever possible, the file system will be recoverable to either the original state, or to the intended state, if any I/O (e.g., a network connection) fails.

The value of the after-state filesystem MAC is written to the alternate location after setting the FSTYPE_DIRTY flag in FS_Type and before setting the FSTYPE_COMMITTED flag in FS_Type. Although this step could be performed anywhere after S101 and before S109b, in this example the after-state MAC is set immediately before setting FSTYPE_COMMITTED (at which point rollback is no longer possible). At this stage, the device has processed the changes and may have cached them in-memory, and therefore it may be more readily able to generate the new filesystem MAC based on the copy in memory, transformed as necessary to reflect what the "cleaned-up" final state will look like. Changing the FS_MAC2 flag to indicate which MAC is the committed MAC is an additional part of step S109b. It is noted that this sequencing applies regardless of whether the transaction is writing, updating or erasing files, or any combination of the three. If a transaction ends up being split up due to storage restraints (e.g. performing erase of previous files when doing an update) then this sequencing applies to the actual resulting individual transactions that are executed, e.g. if an update transaction turns into an erase transaction followed by a new file creation transaction, then the MAC would be updated first for the erasure in the first transaction, and then again for the new file in the second resultant transaction.

Although in this example, the new MAC is generated and stored immediately prior to setting the committed flag, in other examples it may be set at a different point. For example, the device may perform a "dry-run" in main memory before starting writing of changes to the filesystem in storage, in which case it may already be easily able to generate the filesystem MAC immediately after FSTYPE_DIRTY is set. The device may use the combination of the existing cache of filesystem contents plus the transaction change data (likely to be fully in main memory) in order to compute the eventual filesystem state and thence the MAC on it. A MAC such as HMAC only operates on the input message once and can be processed in chunks of the message incrementally, so the entire after-state of the filesystem need not be stored in main memory all at once in order to compute a MAC over it. Thus the after-state MAC could be written as early as immediately after S101.

Recovery (described below in detail in relation to Figure 7) of a filesystem occurs automatically when any read or write is attempted on the filesystem. If a write transaction operation was previously interrupted, when the filesystem is read again it will either be rolled-back to the original state with none of the new files, and the original version of files being overwritten, or rolled-forward to the new state with all the new or changed files. The exception to this is in the event that there was not enough space to make the changes in a fully transaction-safe manner, and the downgraded procedure in S106 was used, in which case a subset of new files may be present and files to be overwritten may have either old or new content or be absent.

The group of files is written (or overwritten) as a single, atomic, transaction. An atomic transaction guarantees that updates do not occur only partially, and thus guarantees that a file transaction as defined by a transaction instruction is either carried through to completion, or does not occur at all. In practice, in the event of an interruption to a transaction, the recovery/repair system rolls the filesystem either forward or backwards, to an initial state or an intended final state.

As has been described above, a downgraded procedure may be followed in S106. As has been described previously, filesystem transactions optionally permit reduced transaction-safety if there is insufficient space. If that option is enabled, then for each intermediate state that arises from the reduced-transaction-safety changes, the updated MAC corresponds to the filesystem state after that intermediate change has been applied. That MAC then in turn becomes the MAC of the before-state for further updates. At each point, when a change is ongoing, the two MACs represent the before and after state of the filesystem for the current change.

### Generating the authentication information

An example method of computing a MAC corresponding to the file system, which may be used in a method of performing a write transaction according to an example, will now be described in relation to Figure 5. In this example, the method is performed by a HSM device 21 as described above.

In S501, an authentication key K_MAC is derived. The authentication key K_MAC is an example of a first cryptographic key. The authentication key is specific to the filesystem - in other words it is derived using information stored in the filesystem (in this example, the nonce). In this example, an authentication key K_MAC is derived using a secure key-derivation function, such as the Concatenation Key Derivation Function from NIST SP 800-56A section 5.8.1, with keydatalen set to KEY_SIZE. The key-derivation function is defined by the ciphersuite specified in FS_CipherSuite.

In this example, the authentication key K_MAC is derived from the following inputs:
i. A HSM-protected key K_HSM - this is an example of second information. This can be a default HSM key, one associated with cryptographic infrastructure loaded on the HSM (e.g. a Security World key), or one generated in the HSM by an administrator.
ii. The nonce specified in FS_Nonce in the filesystem header - this is an example of first information. This means the authentication key cannot be derived, even by the HSM, if this nonce is erased.
iii. User associated key derivation information. In this example, the user associated key derivation information is a PIN for the storage. "PIN" here can be any form of passphrase or other authentication data that must be presented by a user in order to obtain access to the storage.
iv. A "purpose" identifier (such as the string "K_MAC" for the authenticity key) to make the output key unique for the use-case.

A valid MAC in this example therefore cannot be synthesized without an HSM key and a PIN. In other examples, a PIN is not used to generate the authenticity key, and thus a valid MAC cannot be synthesized without an HSM key. Thus in some alternative examples, a different set of key-derivation inputs is used. For example, by not requiring the PIN to derive the authentication key, only the FS_Nonce and HSM-protected key K_HSM are needed to verify the content, with the HSM enforcing administratively that writes are allowed only on presentation of the PIN, or alternatively, permitting writes of files that are not PIN-protected alongside those that are. In a further example, two sets of MACs are used, one with and one without the PIN, at the cost of additional storage overhead and additional updates performed when making a change.

In S502, the authentication information corresponding to the filesystem is computed using the authentication key. In this example, the MAC is computed across a canonical representation of the filesystem state. In particular, the MAC is computed across the concatenation of the following fields:
1. FS_Header information:
   - FS_Type in its finalized state, without FSTYPE_DIRTY or other intermediate state flags set.
   - FS_CipherSuite.
   - FS_Nonce.
2. From the overall filesystem state:
   - The current maximum value of Entry_GenCtr (this allows for the possibility that the maximum is actually specified on a free-space entry and hence not otherwise included).
3. For each Entry in the filesystem of type ETYPE_FILE, in the order in which they appear in the filesystem:
   ∘ Entry_Type (in its finalized state)
   ∘ Entry_Len
   ∘ Entry_GenCtr
   ∘ Entry_NameLen
   ∘ Entry_Name
   ∘ Entry_Content

In one example, the MAC is computed on the real information about the contents of the filesystem, independent of internal details like free-space (except for GenCtr where it is captured in one of those entries) and any transaction state information for example.

As the MAC is computed from the canonical representation, and does not reflect free-space entries, in an example, the fail-safe compaction algorithm may be performed without needing to update the MAC of the filesystem. The canonical representation is an example of a unique representation that any filesystem can be transformed to, that is byte-for-byte identical to the canonical representation of another filesystem if and only if the two filesystems have semantically equivalent content. For example, a filesystem comprising **|File A|FREE SPACE|File B|** may be considered semantically equivalent to |File **A|File B|FREE SPACE|.** In some examples, the filesystem **|File A|File B|** may be considered to be semantically equivalent to **|File B|File A|,** with the canonical representation being the former, if there is an implicit ordering and actual order in the filesystem doesn't matter. An example method of generating a canonical representation in an analogous context is XML canonicalization for XML signatures, but the various methods may be used.

In an example, the canonical representation is taken to be a particular ordering of entries in the filesystem, e.g. based on the encoded values of the Entry_Name, either by plaintext of the filename, or by the ciphertext. For example, it may be useful in some cases to be able to do a re-ordering of filesystem content without needing to update the MAC.

In an example, a stricter implementation is used, having the MAC across free-space entries too, in which case the separate inclusion of the maximum Entry_GenCtr could be omitted as it would be covered by the individual entries.

Note that in this example, the MAC is taken across the ciphertexts, where applicable, and so decryption of files is not needed in order to verify the filesystem state.

The MAC is computed using the method defined by the ciphersuite specified in FS_CipherSuite, which may be HMAC/SHA-256 or HMAC/SHA-512 for example. A MAC may also be referred to as an authentication tag. The MAC is computed using the authentication key and the representation of the filesystem state set out above. The MAC may be computed using a keyed cryptographic hash function. For example, the MAC may be a keyed cryptographic hash of the representation of the filesystem state generated using the authentication key. A keyed cryptographic hash function maps a binary string of any length to a binary string with a fixed size of bits (hash value). A keyed cryptographic hash function is a one-way function, in other words it is relatively easy to compute the hash from an input, but hard to compute the input from a hash. It is also difficult to forge a valid output without knowledge of the authentication key.

Although in this example, in order to generate the authentication information corresponding to the filesystem a MAC is generated, alternative examples may use other types of authentication information. For example, an asymmetric signing scheme may be used to generate the authentication information. In particular, the contents of the filesystem may be signed with a private key. For example, a private key may be stored in the FS_Header that is encrypted with a key derived in a similar manner to K_SEC described below, but again with choice over which inputs are used for derivation, and with a different "purpose" identifier. In this case, the FS_MAC1/FS_MAC2 may be replaced with before and after asymmetric signatures, updated with the same sequencing described herein for the MACs. Alternatively, the asymmetric key could be stored only in the HSM, possibly shared for use across multiple storage devices.

### Erase transaction

The method of performing a file transaction on a device will now be further described in relation to Figure 6. Figure 6 is a flowchart showing a method of performing a file transaction on a device in accordance with an example. The steps performed responsive to determining that the transaction operation is an erase transaction operation in S102 are shown in Figure 6.

Again, a transaction instruction to perform a set of one or more transaction operations on the device is provided by the HSM. For example, a user may connect a smartcard storing a filesystem to a HSM device 21 in a manner such as has been described in relation to Figure 2(a) or 2(b) above (either locally or remotely). The user may then send a command to the HSM device 21 comprising transaction information, for example that a file be erased. The HSM device 21 generates a transaction instruction in response to the user command.

As has been described above, prior to the transaction being performed, the filesystem header comprises stored first authentication information corresponding to the filesystem. In particular, in this example, a MAC is located in one of FS_MAC1 and FS_MAC2. The filesystem also comprises stored authentication identification information, the FS_MAC2 flag in this example, indicating the location (FS_MAC1 or FS_MAC2) that stores the valid authentication information, i.e. that currently stores the relevant information. The authentication identification information in this example is the file system type, the FS_MAC2 flag in FS_Type described above.

As has been described above, prior to performing S101, in which the FS_Type is updated to set the FSTYPE_DIRTY flag to indicate that a transaction is in progress, a step of authenticating the filesystem may be automatically performed by the device. Alternatively, an authentication is performed once when the storage is connected, and is not then performed for each operation.

Steps S101 and S102 shown in Figure 4 are also shown in Figure 6 for clarity. The steps performed responsive to determining that the transaction is an erase are then shown in Figure 6. Thus if a transaction is an erase, step S108 is performed instead of S103. Erase transactions have the structure shown in Table 5 above, where TKNFS_ERASE is specified. An erase transaction corresponds to a file object. The erase transaction operation objects in the transaction instruction collectively relate to a second file group, comprising at least one file object. The second file group comprises all the file objects to be erased from the device, wherein each of the file objects comprises identification information, namely the filenames.

In S108, the file due to be erased has its type updated to the ETYPE_UNCOMMITTED_ERASE Entry_Type. This is a second uncommitted type, that is used for files to be erased.

As has been described previously, in response to all new file entries having been written, and all the Entry_Type of files to be erased having been updated to ETYPE_UNCOMMITTED_ERASE, second authentication information corresponding to the finalized filesystem state is generated and stored in S109a. In this example, a MAC is computed and stored in the alternate location i.e. the one of FS_MAC1 and FS_MAC2 that is not indicated by the FS_Type information (in particular, by the authentication identification information, the FS_MAC2 flag in this example) to store the valid authentication information - in other words the unused location.

The transaction instruction is then flagged as committed by setting the FS_Type to the FSTYPE_COMMITTED flag and the authentication identification information updated in S109b as shown in Figure 4. This step is also shown in Figure 6. In this step, the authentication identification information is updated to indicate the location of the valid authentication information. In this example, the FS_MAC2 flag in FS_Type is updated to indicate the other of FS_MAC1 and FS_MAC2.

Following the FSTYPE_COMMITTED flag being set, each of the ETYPE_UNCOMMITTED_ERASE files are erased in turn as per a safe erasure algorithm in S112.

Finally, the FS_Type in the general filesystem header is updated to clear both the FSTYPE_COMMITTED and FSTYPE_DIRTY flags as has been described previously in S113.

A safe erasure algorithm performed in S112 may be as follows:
i. The Entry_Type of the Entry_Block is set to ETYPE_UNCOMMITTED_FREESPACE (this informs the filesystem recovery code that the original data may not yet have been fully overwritten with zeroes);
ii. All storage in the Entry_Block after the Entry_Len field is overwritten with zeroes;
iii. If the Entry_Block is not preceded, or followed by, a ETYPE_FREESPACE entry:
   Entry_Type of the Entry_Block is updated to ETYPE_FREESPACE;
   else, if the Entry_Block is preceded, but not followed by, an ETYPE_FREESPACE entry:
      the preceding ETYPE_FREESPACE entry is resized using the safe header update algorithm (see "Updating entry Headers" algorithm below) to encompass both the entry being erased and the one preceding it;
   else, if the Entry_Block is only followed (i.e., not preceded) by a ETYPE_FREESPACE entry:
      the Entry_Block being erased is resized using the safe header update algorithm to encompass both the entry being erased and the one following it, and the type of the Entry_Block then changed to ETYPE_FREESPACE;
   else, if the Entry_Block is preceded and also followed by a ETYPE_FREESPACE entry:
      the preceding ETYPE_FREESPACE entry is resized using the safe header update algorithm to encompass all three blocks.

The ETYPE_UNCOMMITTED_FREESPACE is a means to ensure that free space that was previously being used to store a file gets zeroised during filesystem recovery, if it wasn't zeroised due to a change being interrupted. For example, if a file is logically erased but the original storage wasn't zeroised so that data could still be recovered. This will be taken care of during recovery when the filesystem is next loaded, so that there is no leakage of data after it is erased.

Although for simplicity, the method has been shown with the steps for the write transactions in full in Figure 4 and the erase transactions in full in Figure 6, it will be clear to the skilled person how the method is performed in the case where the transaction instruction comprises both erase and write transaction operation objects. In particular, it is clear from the above description that the committed flag is not set until all new file entries have been written as uncommitted and the entry type of all files to be erased is set to uncommitted erase. Furthermore, it is clear that the committed flag and the transaction in progress flags are not cleared until all new files are updated to finalised and all uncommitted erase files are erased.

Any file being erased is generally first overwritten with zeroes before being converted into free space. The space freed by this operation is co-coalesced with any free space preceding or following the file being erased. The callback to Tknfs_EnumEntries( ) records the first free space record found before the given file, and the first non-free-space record found after it. All storage between these two addresses is converted into one free space record, so that neighboring blocks of free space are aggregated.

If the file transaction is interrupted, when the filesystem is read again it will either be rolled-back to the original state with the files present or rolled-forward to the intended state with the files removed. This will be described in relation to Figure 7 below.

It will be understood that the erasure operation can apply to any of: erasing a ETYPE_FILE as part of a Tknfs_Transact transaction; erasure of any other Entry_Block, e.g., erasure of the existing copy of a file being overwritten when committing a transaction; and erasure of a ETYPE_UNCOMMITTED_FILE when rolling back an uncommitted transaction during a repair operation. This procedure may therefore be performed in S112 and S111 of the above-described method.

### Filesystem Check and Recovery

In this example, when performing an access operation on the device, a filesystem check and recovery procedure is first performed. In particular, before performing any read or write operation on the filesystem, a filesystem check is automatically performed. This is to determine whether an interruption to a transaction had previously occurred, which had left the filesystem in an intermediate state. Figure 7 shows a method of performing an access operation on a device in accordance with an example.

An access operation may be a write, erase or overwrite transaction for example. An access operation may alternatively be a read operation. For example, a user may connect a smartcard storing a filesystem to a HSM device 21 in a manner such as has been described in relation to Figure 2(a) or 2(b) above (either locally or remotely). The user may then send a command to the HSM device 21 to perform an operation using information stored on the smartcard filesystem. The HSM device 21 then reads information from the smartcard filesystem - this is another example of an access operation. Before reading the information, a filesystem check is automatically performed.

In this example, a step S707 of authenticating the file system is performed. However, this step is optional. For example, in some implementations, an authentication is performed once when the storage is connected, and is not then performed for each access operation.

An example filesystem check is performed as follows:
v. The FS_Type is read and checked to be a valid value; if FS_Type is not a valid value, an error is returned (during formatting, the FS_Type is actively zeroed, in order to indicate an invalid filesystem - this is updated to indicate a valid filesystem once formatting is complete);
vi. If the FSTYPE_DIRTY flag is not set, a step of authenticating the filesystem is automatically performed by the device. A method of authentication of the filesystem is described in relation to Figure 8 below. Thus in S701, it is determined whether the FSTYPE_DIRTY flag is set. If not, the method proceeds to S707, where an authentication of the file system is performed. After this, if the authentication was successful, the check may be terminated, and the access operation proceed in S708 (for example with a transaction or read operation). Optionally, an implementation may continue to perform an integrity check to validate that all entries in the filesystem contain valid Entry_Type values, and valid embedded lengths in Entry_Len and Entry_NameLen. If the authentication is not successful, an error is returned in S709. For example, a message is sent to the user device indicating that the authentication was not successful.
vii. The check then iterates through each file entry header noting the presence of any Entry_Type of ETYPE_FRAGMENT, ETYPE_UNCOMMITTED_FREESPACE, ETYPE_UNCOMMITTED_FILE or ETYPE_UNCOMMITTED_ERASE, and any ETYPE_UNCOMMITTED_LENGTH flag. Thus in S702, it is determined whether there are any file entries having an uncommitted file type (ETYPE_UNCOMMITTED_FILE). It is also determined whether there are any file entries having a ETYPE_FRAGMENT, ETYPE_UNCOMMITTED_FREESPACE, ETYPE_UNCOMMITTED_ERASE, or ETYPE_UNCOMMITTED_LENGTH type.

The repair functionality is executed in the following way:
i. If the ETYPE_UNCOMMITTED_LENGTH flag is present in the Entry_Type of any entry, the Entry_Len is updated with the length read from FS_Len2, and the ETYPE_UNCOMMITTED_LENGTH flag is subsequently unset.
ii. In S703 it is determined whether the FSTYPE_COMMITTED flag is set in FS_Type. If FSTYPE_COMMITTED is set in FS_Type, the commit process will be completed by rolling forward the transaction in S704 and/or S706. The authentication of the filesystem will then be performed in S707 as above, to determine whether the access operation proceeds as described above. As described elsewhere, in some examples all of the tracking of the changes is done in main memory and authenticated in main memory (and only when the transaction is COMMITed do the writes happen to the filesystem). In this case, the authentication is performed based on the after-state authentication information. In particular, if FSTYPE_COMMITTED is set in FS_Type, the authentication identification information, the FS_MAC2 flag, in FS_Type will identify the after-state MAC as being the valid authentication information. The roll forward of the transaction proceeds as follows:
   a. Any ETYPE_FILE entries with filenames matching those of ETYPE_UNCOMMITTED_FILE entries are erased as per the safe erasure algorithm;
   b. Any ETYPE_UNCOMMITTED_FILE Entry_Type entries are updated to ETYPE_FILE in S704;
   c. Any ETYPE_UNCOMMITTED_ERASE files are erased as per the safe erasure algorithm in S706.
iii. If FSTYPE_COMMITTED is not set in FS_Type, the transaction will be rolled back in S705. The authentication of the filesystem will then be performed in S707 as above, to determine whether the access operation proceeds as described above. As described elsewhere, in some examples all of the tracking of the changes is done in main memory and authenticated in main memory (and only when the transaction is COMMITed do the writes happen to the filesystem). In this case, the authentication is performed based on the before-state authentication information. In particular, if FSTYPE_COMMITTED is set in FS_Type, the authentication identification information, the FS_MAC2 flag, in FS_Type will identify the before-state MAC as being the valid authentication information. The roll back in S705 is performed as follows:
   a. Any ETYPE_UNCOMMITTED_FILE entry will be erased as per the safe erasure algorithm;
   b. Any ETYPE_UNCOMMITTED_ERASE entry will be restored to ETYPE_FILE;
   c. Optionally, any after-state authentication information may be erased;
iv. Any ETYPE_UNCOMMITTED_FREESPACE entries are erased as per the safe erasure algorithm.

Recovery from failures during recovery is also provided by the above method.

As will be described in more detail below, in some examples in which encryption and version validation are provided, additional repair functionality is provided. For example, the following additional recovery operations are performed, which will be described in more detail in the relevant sections below:
1. If a re-keying operation has started, the operation is continued from where it left off according to FS_ReKeyOffset, as described in more detail in the section "Re-keying" below.
2. If the FSTYPE_OLD_GENCTR flag is set, the Entry_GenCtr updates are completed as per the fail-safe GenCtr update algorithm, as described in more detail in the section "Validation of filesystem version" below.
3. After completion of all other recovery operations, or if there were no apparent recovery operations but the FSTYPE_DIRTY flag was set, then any intermediate state in FS_Buffer is also securely erased in order to remove any data (such as encrypted copies of old keys or encrypted PIN etc.) that is present, before clearing the FSTYPE_DIRTY flag.

In this example, authentication is performed after the check to determine whether a transaction is in progress and after any repair operation, e.g. after a roll-back or roll-forward is performed. When carrying out operations that involve rolling-back, rolling-forward or completing a re-keying operation, it may not be possible to immediately authenticate the filesystem state until the recovery operation has completed.

As has been described previously, in some examples the device initially performs an in-memory dry-run operation which may compute the changes to be made to the filesystem in storage, the new GenCtr values, and the new final state, before applying the changes to the filesystem storage itself. In such examples, the in-memory representation may be verified against the before-state MAC (for a rollback) or after-state MAC (for a roll-forward or re-key operation), to confirm the integrity, before making persistent changes to the filesystem on storage.

### Authenticating the filesystem

Figure 8(a) is a flowchart showing an example method of authenticating a filesystem.

The method may be performed as part of a method of performing a file transaction or a method of performing an access operation as described above for example. The method may be performed in S707 described in relation to Figure 7 above for example. As has been described previously, the method may be performed by a HSM.

The authentication method may be performed when the storage is being used for a session with multiple transactions, for example multiple reads and writes. For example, the authentication method may be performed when a storage device is initially connected to a HSM, with the HSM having exclusive control of the storage throughout the session. In this case, there would be no need to re-authenticate for each transaction, as any changes during that session would have been made by the HSM only. In one example, the HSM may use a cache of read or written addresses during the session.

In step S801, the authentication identification information stored in the filesystem is obtained by the device. The authentication identification information stored in the filesystem header is retrieved by the device. For example, where the filesystem is stored on a smart card connected to a HSM 21, the HSM 21 reads the authentication identification information from the filesystem on the smart card. In this example, the authentication identification information corresponds to the FS_MAC2 flag in FS_Type information in the filesystem header. The authentication identification information, the FS_MAC2 flag in this example, identifies the current location of the valid filesystem authentication information in the file system header - either FS_MAC1 or FS_MAC2 in this example.

In step S802, the obtained filesystem authentication information is then obtained by the device. In this step, the authentication information is read from the location identified by the authentication identification information. In this example, the MAC is read from the one of FS_MAC1 or FS_MAC2 in the filesystem header which was identified by the file system type information - the FS_MAC2 flag. This is the obtained filesystem authentication information.

In S803 to S805, the device authenticates the filesystem based on the obtained filesystem authentication information.

In particular, in S803, the device generates the authentication key, K_MAC. The authentication key is generated in the same manner as described in S501 above.

The device then generates the generated filesystem authentication information in S804. The generated filesystem authentication information is generated based on the current contents of the filesystem. The generated authentication information is generated in the same manner as described in relation to S502 above. In particular, a MAC of the current filesystem is generated in this example.

The device then compares the generated authentication information with the obtained authentication information to determine if they are the same. In this step, the two MACs - i.e. the MAC read from the one of FS_MAC1 or FS_MAC2 in S802 and the MAC generated in S804 are compared to determine if they are the same.

If the generated authentication information is the same as the obtained authentication information, then the filesystem is authenticated. The method may then proceed with a transaction in S708 or a session for example. If the generated authentication information is not the same as the obtained authentication information, then the filesystem is not authenticated. The method may then return an error, for example in S709 the method may return an error for example. In some examples, the method may disconnect a HSM from the storage device, so that no subsequent reads or writes would be attempted.

### Validation of filesystem version

As has been described previously in relation to Table 3a, a filesystem entry, or Entry_Block, comprises an entry header comprising: an entry type, entry length, entry generation counter Entry_GenCtr, name length, and entry name. This entry header information is then followed by the entry content.

The inclusion of entry generation count information is an optional feature. The generation counter feature may be used to prevent malicious rollbacks and also to compute IV (Initialization Vector) values of files for encryption purposes. In some examples, the entry headers do not comprise an entry generation count. An example including the entry generation count information will now be described in more detail. The entry generation count information Entry_GenCtr comprises in this example 2 bytes of information stored in the entry header. The entry generation count comprises information indicating the generation of the operation which created the entry.

The update of the entry generation count information will now be described in relation to a transaction.

As has been described previously in relation to Figure 4, in a write transaction, in S107, file data is written with an uncommitted file type. Writing the file data with an uncommitted file type comprises updating an entry header. In S107, an ETYPE_FREESPACE entry may be split into the new file entry (in which the file data is written) and a smaller ETYPE_FREESPACE block. The header is updated as an initial step, before the file contents are written. When updating the entry header, safe updating of the length of the entry may be performed according to a method described in PCT/GB2021/050851, the entire contents of which is incorporated by reference herein. As has been described previously in relation to Figure 6, in an erase transaction, in S112, a safe erasure algorithm may be performed to erase the uncommitted files. In this step, an entry header is updated. In particular, if the entry to be erased is not preceded, or followed by, a ETYPE_FREESPACE entry, the Entry_Type of the entry to be erased is updated to ETYPE_FREESPACE. If the entry to be erased is preceded, but not followed by, an ETYPE_FREESPACE entry, the preceding ETYPE_FREESPACE entry is resized using the safe header update algorithm described above to encompass both the entry being erased and the one preceding it. If the entry to be erased is only followed (i.e., not preceded) by a ETYPE_FREESPACE entry, the entry being erased is resized using the safe header update algorithm to encompass both the entry being erased and the one following it, the type of the entry being erased is then changed to ETYPE_FREESPACE. If the entry being erased is preceded and also followed by a ETYPE_FREESPACE entry, the preceding ETYPE_FREESPACE entry is resized using the safe header update algorithm to encompass all three blocks.

Before FSTYPE_COMMITTED is set on FS_Type in S109b, the Entry_GenCtr information in any new entries is set to zero, and the Entry_GenCtr information in any existing entries (even if they are to be erased) is left unmodified at this stage. The FS_OldGenCtr value in FS_Buffer in the file system header is updated in S107 to contain the old maximum Entry_GenCtr value prior to the currently in-progress transaction. In this step, the file system is searched for the maximum value of any entry, i.e. the maximum Entry_GenCtr value present on any filesystem entry. This value is stored as the FS_OldGenCtr value in FS_Buffer.

In an alternative example, at this stage the Entry_GenCtr information in any new entries may be set to the intended post-commit GenCtr value (which may have been computed to compute the MAC) rather than to zero. In this alternative example, the new entries are then specifically excluded when the file system is searched for the maximum Entry_GenCtr value to store as the FS_OldGenCtr value in FS_Buffer.

The Entry_GenCtr fields are not modified until after the FSTYPE_COMMITTED flag is set on FS_Type in S109b, though the effective values may be computed up-front for use when computing IVs for any new file entries created during the transaction. When FSTYPE_COMMITTED is set in S109b, the FSTYPE_OLD_GENCTR flag is set in the **'FS_Type'** byte at the same time (to indicate FS_OldGenCtr contains a valid old max GenCtr value) and then, the following operations are carried out for files and newly created free-space:
• For each ETYPE_UNCOMMITTED_FILE, its Entry_GenCtr is set as FS_OldGenCtr + index of this file in the list of file entries being committed (with index 1 being the ETYPE_UNCOMMITTED_FILE file at the lowest storage address in the group of such entries).
• For each contiguous group of free-space blocks containing an ETYPE_UNCOMMITTED_ERASE or ETYPE_UNCOMMITTED_FREESPACE in the group (contiguous free-space blocks means consecutive blocks are ETYPE_UNCOMMITTED_ERASE, ETYPE_FREESPACE, ETYPE_UNCOMMITTED_FREESPACE or ETYPE_PADBLOCK with no intervening ETYPE_FILE ETYPE_UNCOMMITTED_FILE entries):
   o The free-space is coalesced into a single ETYPE_UNCOMMITTED_FREESPACE free-space block using a fail-safe length update as described in PCT/GB2021/050851, the entire contents of which is incorporated by reference herein.
   o The Entry_GenCtr entry is updated to be the new maximum GenCtr from new or updated file entries, or if there are no new or updated file entries (i.e. transaction consists only of erase operations), then the Entry_GenCtr is set to the value FS_OldGenCtr + 1 (i.e. all free-space created or extended during a transaction will get the same Entry_GenCtr value).
   ∘ Any previously written storage in the free-space area is securely erased and then the Entry_Type is changed to ETYPE_FREESPACE to indicate processing of that modified free-space has been completed.
• The FSTYPE_OLD_GENCTR flag is cleared on FS_Type (this may be done at the same time as removing the ETYPE_DIRTY flag in S113 if no other intervening state changes are needed).

In particular, when a file is written, it is assigned the next available integer Entry_GenCtr value, as determined by traversing the filesystem to determine the current highest value from all the Entry_GenCtr fields in all Entry_Block entries in the filesystem. The Entry_GenCtr value is assigned in the HSM main memory for example. The GenCtr is not written into the filesystem until after COMMITTED is set in this example. In some examples, this value is cached to avoid the need to re-traverse the filesystem after the initial update. Note that this means that even when several files are written as a transaction, that the Entry_GenCtr will be different for each file. The Entry_GenCtr value is also referred to here as a transaction count value.

The entry generation count information Entry_GenCtr is updated when a new file is written, an existing file is overwritten, and/or an existing file is erased. In particular, a completely new file will have the next Entry_GenCtr assigned to it, an overwritten file will have the next Entry_GenCtr assigned to the new version of the file, and erasure of a file shall update Entry_GenCtr and that will be detectable by the Entry_GenCtr value of a free-space entry that is created, as described above. The entry generation count information Entry_GenCtr is updated for every change in the same transaction instruction, i.e. not just once for the whole transaction instruction. Thus separate transaction instructions to create two new files will update Entry_GenCtr to the same final value as creating those two files with a single transaction instruction, for example. Compaction of the filesystem does not update the entry generation count information Entry_GenCtr however. Thus the entry generation count information Entry_GenCtr is updated in the case where a block changes from file data to free-space or the reverse, or in the case that a free-space entry is extended and gets a new Entry_GenCtr value due to erasure of an adjacent file for example.

The generation count for the filesystem corresponds to the maximum value of the entry generation count information Entry_GenCtr present on any filesystem entry. In this example, the entry generation count information of the filesystem's most recent update, corresponding to the filesystem generation count, is stored independently out-of-band. In particular, the generation count for the filesystem is stored on a separate storage device to the filesystem. For example, the generation count for a filesystem stored on the smartcard 23 is stored on the HSM 21 shown in Figure 2(a). The generation count may be stored together with information identifying the file system to which the count corresponds. The entry generation count information of the filesystem's most recent update may be stored either immediately prior to setting the FSTYPE_COMMITTED flag or immediately after for example. For example, if applying a strict rule of rejecting any earlier filesystem versions than the one recorded out-of-band (to prevent roll-backs), the entry generation count information of the filesystem's most recent update may be stored immediately after setting the FSTYPE_COMMITTED flag. If the out-of-band information includes the transaction status (i.e. distinguished between a tentative update that may be rolled back and one that had been confirmed committed) then the entry generation count information of the filesystem's most recent update may be stored immediately prior to setting the FSTYPE_COMMITTED flag or immediately after for example.

A filesystem can be identified by its nonce fingerprint. In other words, the information identifying the filesystem can be generated from the nonce value FS_Nonce stored in the filesystem header, where the nonce value comprises filesystem-specific HSM-generated random data. For example, a cryptographic hash of the value of the FS_Nonce concatenated with a use-case identification string e.g. the ASCII representation of the string "FS_Nonce" may be used as information identifying the filesystem. In an example, the out-of-band storage stores the nonce fingerprint value (identifying the filesystem) and the generation count for the file system.

As described above, in this example the out-of-band storage is storage within an HSM. The per-storage-device data size is small, 18 or 34 bytes for 128-bit or 256-bit security respectively with the default Entry_GenCtr size. In other examples, the generation count is stored in some other storage, such as in Operator Card Set files. It may be stored across one or more separate smart cards.

The out-of-band expected generation count of the filesystem is provided as input when loading the filesystem (i.e. after connection is made to the storage, and before any read or write operation on it). A filesystem with a lower generation count will be denied as an unauthorized rollback to a previous version of the filesystem state. Thus the values from the out-of-band storage is read when loading the filesystem, and any filesystem not matching could be rejected. Matches could be a strict comparison of the nonce fingerprint and generation count, or it may be that higher generation count is tolerated, according to implementation requirements, and expectations on how the out-of-band storage would be updated.

For example, as has been described in relation to Figures 4 and 6 above, a transaction instruction to perform a set of one or more transaction operations on the device is provided by the HSM 21. The transaction instruction may be generated at the HSM device 21 in response to a command received by a user. The transaction instruction comprises one or more transaction objects as described in Table 5 above, each specifying a transaction operation to be performed. These operations correspond to those specified in the user command. For example, a user may connect a smartcard storing a filesystem to a HSM device 21 in a manner such as has been described in relation to Figure 2(a) or 2(b) above (either locally or remotely). The user may then send a command to the HSM device 21 comprising transaction information (for example, requesting that a new file be written to the smart card, that a file be updated with an overwrite transaction, or that a file be erased). The HSM device 21 generates a transaction instruction in response to the user command. In this example, prior to performing S101, in which the FS_Type is updated to set the FSTYPE_DIRTY flag to indicate that a transaction is in progress, a step of confirming the generation count is performed. An example method of confirming the generation count is described in relation to Figure 8(b) below.

The method of confirming the generation count may be performed prior to, at the same time as, or after the authentication method described in relation to Figure 8(a) for example. This mitigates a risk that an old version of the filesystem could be restored and presented.

As has been described in relation to Figure 7 above, when performing an access operation on the device, a filesystem check and recovery procedure is first performed. Generally, before performing any read or write operation on the filesystem, a filesystem check is automatically performed. In particular, a user may connect a smartcard storing a filesystem to a HSM device 21 in a manner such as has been described in relation to Figure 2(a) or 2(b) above (either locally or remotely). The user may then send a command to the HSM device 21 to perform an operation using information stored on the smartcard filesystem. The HSM device 21 then reads information from the smartcard filesystem - this is an example of an access operation. Before reading the information, a filesystem check is automatically performed. In this example, the filesystem check further comprises a step of confirming a generation count. An example method of confirming a generation count is described below in relation to Figure 8(b). This method may be performed as part of S707 for example.

During the method described in relation to Figure 7, responsive to determining that the device stores transaction information indicating that a transaction is committed in S703, it is determined whether the FSTYPE_OLD_GENCTR flag is set. If the FSTYPE_OLD_GENCTR flag is set, then new GenCtr values are computed deterministically from the old FS_OldGenCtr value in FS_Buffer and set for all uncommitted files and uncommitted free-space entries. During such a repair action, the Entry_GenCtr value is updated in all uncommitted files to the new GenCtr value computed as FS_OldGenCtr + index in filesystem out of the current uncommitted files (with the uncommitted file at the lowest storage address being index 1). Any contiguous free-space group is coalesced and Entry_GenCtr is set in the resulting free-space entry to the highest GenCtr from any file updates, or if only deletions of existing files occurred in the transaction, all new or coalesced free-space entries are set to FS_OldGenCtr + 1 to ensure that the new max GenCtr is updated to reflect the change. Thus if the FSTYPE_OLD_GENCTR flag is set, the Entry_GenCtr updates are completed as per the fail-safe GenCtr update algorithm.

Figure 8(b) is a flowchart of a method of confirming a generation count for a filesystem. The method may be performed as part of a method of performing a file transaction or a method of performing an access operation as described above for example.

In step S901, the generation count stored in the out of band storage (for example on the HSM device 21) is retrieved.

The generation count for the filesystem to which the transaction relates is determined in S902, by reading the entry generation count information from each entry in the filesystem, and determining the maximum value.

The determined generation count and the stored generation count are then compared in S903 to determine if they are the same.

As described above, the method of Figure 8(b) may be performed as part of S707. If the method of Figure 8(b) is performed prior to the filesystem authentication, then, in the case that the determined generation count and the stored generation count are the same, the method proceeds to perform the filesystem authentication as described previously. If the method of Figure 8(b) is performed after the filesystem authentication, then, in the case that the determined generation count and the stored generation count are the same, the method proceeds to perform the transaction in S708. If the determined generation count and the stored generation count are not the same, then the method returns an error as in S709. In some examples, no filesystem authentication is performed in S707, but a method of confirming a generation count is performed. For example, the filesystem authentication and confirmation of generation count may be performed at the start of a session, when the filesystem is connected to a HSM. Confirmation of generation count may then be performed for each operation. Alternatively, the filesystem authentication and confirmation of generation count may be performed at the start of a session only, and step S707 may be omitted.

In the example described above, during the filesystem authentication, the MAC is computed on a "canonical" representation of the filesystem, that ignores the layout of free-space entries, but does include the current max Entry_GenCtr value (even if that is on a free-space entry). This enables revocability of previous versions. In other words changes to the filesystem are versioned by updating the Entry_GenCtr value. The lowest permitted version (or a permitted version range or a specific allowed version for example), along with a filesystem nonce fingerprint, are stored separately from the filesystem storage device. This also provides auditability.

The maximum Entry_GenCtr value provides an indication of whether the state of the filesystem has changed. The Entry_GenCtr values on individual files also give an indication of the ordering of creation of files, and a way to detect that a file with a given name has changed from a previous version as a single small value.

In some examples, additional auditing steps may be performed in Figure 8(b). For example one or more of the following information elements may be stored in the out-of-band storage together with the generation count:
- A list of each {nonce fingerprint, generation count} pair in history to show each change that occurred;
- Additional values for each event, such as a timestamp (which could also double as a last-updated time for files with corresponding Entry_GenCtr values) or identity information about the user or application which made the change;
- An HSM signature across all these values to confirm authenticity.

Each of these elements may then be checked against the corresponding information in the filesystem as part of the method of Figure 8(b).

The timestamp and HSM authentication information (e.g. HSM signature) could not in and of itself prevent rollback attacks if an attacker can modify the audit log (as the attacker could delete later entries). The security of the prevention of rollbacks of the filesystem state relies on the last {nonce fingerprint, generation count} pair being reliably stored. Storage of that information in the HSM may be the most secure option.

### Encryption

In a further example, file names and file contents are encrypted and not readable without an HSM key and optionally additionally a PIN. Secrecy is achieved by encrypting the file name and file content using a secrecy key K_ENC. For example, the secrecy key may be derived up-front when a storage device is first connected to the HSM, or as part of a filesystem-wide initialization. Alternatively, the secrecy key would be derived before reading or writing filesystem data. For example, the secrecy key may be derived as part of or before S107 and as part of or before S701. The secrecy key K_ENC is an example of a second cryptographic key.

In particular, this example uses a secrecy key K_ENC and an authenticity key K_MAC. Some other examples may derive additional keys. In this example, a secrecy key K_ENC is derived using a secure key-derivation function such as the Concatenation Key Derivation Function from NIST SP 800-56A section 5.8.1, with keydatalen set to KEY_SIZE. The key-derivation function is defined by the ciphersuite specified in FS_CipherSuite.

In this example, the secrecy key K_ENC is derived from the following inputs:
1. A HSM-protected key K_HSM. This is an example of second information. This can be a default HSM key, one associated with cryptographic infrastructure loaded on the HSM (e.g. a Security World key), or one generated in the HSM by an administrator.
2. The nonce specified in FS_Nonce in the filesystem header. This is an example of first information This means the encryption key cannot be derived, even by the HSM, if this nonce is erased.
3. User associated key derivation information. In this example, the user associated key derivation information is a PIN for the storage. "PIN" here can be any form of passphrase or other authentication data that must be presented by a user in order to obtain access to the storage.
4. A "purpose" identifier (the string "K_ENC" for the secrecy key) to make the output key unique for the use-case.

In this example, the secrecy key K_ENC and authenticity key K_MAC are both generated using the first information and the second information. In this example, the secrecy key K_ENC and authenticity key K_MAC are both generated using the same information, other than the purpose identifier which is different. However, in other examples, the secrecy key K_ENC and authenticity key K_MAC may be generated using different information. For example, both keys may be derived using information stored in the filesystem and information stored on a second device, but the information stored in the filesystem and/or the information stored on a second device may be different.

In some examples, either the filesystem as a whole, or individual files, may not require particular inputs (such as the PIN) to derive a secrecy key used for encryption. If individual files may have different encryption settings, then this could be indicated using flags bits set in Entry_Type. There are several reserved bits free which could be used for this purpose. If additional configuration options are needed, then additional storage space could be used to store that information per-file.

In some examples, Entry_Name (i.e. filename) may be encrypted separately and differently from Entry_Content (i.e. file content), or there may be the option for non-encrypted filenames and/or files. For example, in some examples the PIN is not required for filenames, or non-encrypted files may have a volume description file that can be inspected by a user to see what is on the storage, before supplying the PIN to decrypt further content. Again, if these are per-file settings, then flags on Entry_Type can be used to support those configuration options.

In examples in which an Entry_GenCtr value is used, this value can be used directly as the IV (Initialization Vector) for the encryption of Entry_Name and Entry_Content. Alternatively, Entry_GenCtr may instead be used to derive the IV (e.g. by encryption with K_ENC or a similarly derived key with an alternative "purpose" identifier) if that is required for security of the encryption scheme used.

Stronger resistance to remanence of data after formatting is provided, as filenames and contents are encrypted. Only the filesystem nonce needs to be securely erased. The primary remanence resistance is provided by encryption, and only the FS_Nonce must be securely erased in a remanence-resistant manner when re-formatting the filesystem, if all filenames and content are encrypted. If the filesystem contains filenames or content that is not encrypted, but is still required to be secure erased, then secure erasure must also be done for that content when formatting existing storage.

In some examples, preparation of the storage may be performed prior to first formatting in order to help resist remanence issues. These operations may be storage hardware-specific. The operations might include cycling with random data and/or zeroes and/or ones a certain number of times, if such operations have been shown to reduce remanence in the particular hardware. This step could be skipped if the filesystem had previously been correctly formatted.

In normal operation, when erasing filesystem entries or erasing backup data in FS_Buffer, it may be sufficient to zeroize the storage in question. Zeroization may be sufficient to prevent remanence issues for encrypted content, because the filesystem state MAC and the revocability of old states via the out-of-band generation counter should prevent an attacker with physical access to the storage from presenting old data selectively to the HSM to decrypt, and without the HSM key even if they can recover old ciphertexts, the attacker cannot decrypt them. Alternatively, in some examples, a hardware-specific secure erasure operation may be performed even for these kinds of updates.

### Re-keying

All encrypted contents of the filesystem can be re-encrypted with a new key "in-place" without storing an extra copy of any files. A re-keying procedure is described below in relation to Figure 9(a). This procedure may be performed as an alternative means to achieve a PIN change (FS_PIN field would be omitted in that case), on a regular basis according to security requirements, as a means to reset the GenCtr if it has reached the maximum value, or each time a file transaction is performed for example.
1. The FSTYPE_DIRTY flag is set on FS_Type in S1001 to indicate that a transaction is in progress. The FSTYPE_DIRTY flag is also referred to as a progress flag, and it indicates a file transaction is in progress.
2. A new secrecy key and a new authentication key are then generated in S1002.ln this example, a new HSM-generated nonce is produced, and written to FS_Nonce2 within the structure FS_ReKey (within the FS_Buffer reserved space). The new K_ENC and K_MAC keys are then derived using FS_Nonce2, the HSM-protected key K_HSM and the PIN.
3. The old secrecy key is then encrypted and stored in S1003. In this example, a K_ENC_OLD is derived from FS_Nonce2, the PIN, and a use-case identifier string (e.g. "K_ENC_OLD"), to produce a unique key for encrypting the old key. The old K_ENC is then encrypted with K_ENC_OLD. A fixed IV in the implementation can be used for this, as it will be the only encryption carried out with the key - if this is not acceptable for the system security, then an IV (or nonce) can be additionally generated and stored, which will require additional storage space in FS_OldKey. This encrypted value shall then be written to FS_OldKey. Alternatively, the old FS_Nonce value can be encrypted with K_ENC_OLD and stored instead.
4. The FS_ReKeyState and FS_ReKeyOffset1 are initialized to 0.
5. New authentication information is then generated using the new authentication key and stored in S1004. The alternate FS_MAC (whichever field of FS_MAC1 and FS_MAC2 is not currently in use for the MAC across the current filesystem state) is set to the MAC computed with the new K_MAC over the canonical representation after re-encryption, which may be done as a dry-run in HSM memory.
6. The FS_Type is updated with the FSTYPE_REKEY flag to indicate that a re-keying is in progress in S1005.
7. Each ciphertext block in each file is re-encrypted in order in S1006 using the following steps, described in relation to Figure 9(b). Each ciphertext block has length matching the block size of the cipher, e.g. 16 bytes for AES):
   o A backup copy of the ciphertext block encrypted with the old K_ENC which is about to be overwritten is stored at FS_ReKeyBlock in S1101.
   ∘ FS_ReKeyOffset is updated to point to the start of the ciphertext block about to be overwritten by writing the new address first to the alternate field (write the new address at FS_ReKeyOffset2 if FSREKEY_OFFSET2 is not set, and to FS_ReKeyOffset1 if that bit is set) in S1102.
   o FS_ReKeyState is updated atomically to both set FSREKEY_BACKUP and to flip the FS_REKEY_OFFSET2 bit to its opposite value in S1103. Setting FSREKEY_BACKUP indicates the ciphertext block at FS_ReKeyOffset may contain either the old data, new data or a partial write of the new data, and so repair must re-encrypt the backup ciphertext block.
   ∘ In S1105 the new, re-encrypted ciphertext block, encrypted with the new K_ENC key, is then written over the previous contents at the location indicated by FS_ReKeyOffset. The ciphertext block is decrypted using the old secrecy key and re-encrypted using the new secrecy key. The GenCtr used to compute the IV for encryption under the new key is assumed to be the index of the file block in the filesystem (with the first file block i.e. at the lowest address, being index 1) though the Entry_GenCtr fields are not updated until after re-encryption has completed at a later step.
   ∘ In S1105, FS_ReKeyOffset is updated to point to the address immediately after the ciphertext block that has just been overwritten by writing the new address first to the alternate field (write the new address at FS_ReKeyOffset2 if FSREKEY_OFFSET2 is not set, and to FS_ReKeyOffset1 if that bit is set).
   ∘ In S1106, FS_ReKeyState is updated atomically to both unset FSREKEY_BACKUP and to flip the FSREKEY_OFFSET2 bit to its opposite value. In this way, FS_ReKeyOffset is represented by one of two fields according to a bit set on FS_ReKeyState so that it can be updated atomically. Whether or not FS_ReKeyBlock contains a currently valid backup of the address indicated by whichever is the currently applicable FS_ReKeyOffset field is indicated by the FSREKEY_BACKUP flag. The FS_ReKeyState can have the backup flag and indicator of which of the FS_ReKeyOffset fields updated as a one byte atomic update, enabling fail-safe updates of the state information as it transitions through each ciphertext block.
8. The Entry_GenCtr value of all file blocks is set to the index of that file block in the filesystem (starting with 1 for the first file), and the Entry_GenCtr of all free-space entries is set to 0. This avoids the need to store both old and new Entry_GenCtr values at once, as the new values are computed deterministically. When recovering filesystem after an interruption, the FS_ReKeyOffset will allow it to be distinguished whether the FS_GenCtr values are still needed for re-encryption of existing data or whether they are to be overwritten with the new determinstically computed values.
9. The FS_Type FSTYPE_REKEY flag to indicate a re-keying is in progress is cleared in S1007.
10. The FS_Buffer contents is securely erased in S1008. In this step, the old secrecy key is erased.
11. The FS_Type FSTYPE_DIRTY flag is cleared in S1009.

In the above procedure, a progress flag in the filesystem header, FSTYPE_DIRTY flag, is set initially to indicate a transaction is in progress. The new secrets are then generated. A re-keying flag in the filesystem header is also set to indicate that a re-keying is in progress. The encrypted contents of the filesystem are then re-encrypted with the new key. This is performed one file at a time.

For each ciphertext block in each file, a backup copy of the original ciphertext block encrypted with the previous key is first stored in a designated location, in this example FS_ReKeyBlock, in the filesystem header. The FS_ReKeyOffset information in the filesystem header is used to indicate the location within the filesystem of the ciphertext block currently being re-encrypted with the new key. This is updated to indicate the start of the ciphertext block about to be overwritten with the re-encrypted version, and a backup of that ciphertext block encrypted with the old key is written to the designated location in the filesystem header, in this example FS_ReKeyBlock. Flags in the filesystem header are then set to atomically change state to indicate the updated location and the fact that this location has a backup. The ciphertext block is then replaced with the re-encrypted contents. This is performed as an overwrite of the existing data in place. The FS_ReKeyOffset is then advanced to point to the end of the re-encrypted data, and flags set in the filesystem header to indicate the backup is no longer applicable and to switch to the updated location. Each ciphertext block in the file is updated in turn in the same manner. The next encrypted file is then processed. Once each encrypted file has been processed, the entry generation count information of every filesystem entry is updated, by the process described previously. The re-keying flag in the filesystem header is unset, the buffer location storing the re-keying information is erased, and the progress flag is unset.

In an alternative example, if a dry-run is to be avoided in step 7 (e.g. to reduce HSM memory consumption if the filesystem is too large for this), then the FS_MAC can be updated after re-keying instead, in which case verification of the state of the filesystem in the event of interrupted re-keying uses the old FS_MAC. In this case, FS_OldKey instead contains the old FS_Nonce in encrypted form, rather than just the old K_ENC encrypted, in order that the old FS_MAC could be computed and verified. Portions of the filesystem already encrypted with the new key are then decrypted and re-encrypted with the old key in HSM memory to determine the ciphertext input to compute the old FS_MAC again (this can be done incrementally, so the entire state of the filesystem does not need to be in HSM memory simultaneously).

In some examples, the re-keying may be optimized if there is sufficient free space in the filesystem, by creating the re-encrypted files as fresh file entries written as though they were a fail-safe update (or overwrite) operation on the existing file, in which case more than one block can be written at a time. This could be done file-by-file, with each old file deleted once the re-encrypted file has been committed. Re-keying may alternatively be optimized without available free-space if additional space is reserved in FS_ReKeyBlock.

In an example in which re-keying is supported, then the nonce fingerprint and generation count of both the original and re-keyed filesystem are stored for the brief period where the re-keying operation is in the process of adding the information such as FS_ReKeyInfo needed to be able to roll-forward to the re-keyed state. Once the information needed to roll-forward re-keying has been added, the out-of-band storage (e.g. on the HSM 21) can immediately delete the old {nonce fingerprint, generation count} entry, even if the storage has not yet fully been processed for re-keying.

Using the above procedure, when re-keying it is possible to recover all encrypted content, even when a mix of keys is present.

In examples in which re-keying is possible, the following additional steps may be performed in the method of performing an access operation on a device described in relation to Figure 7.

In S702, it is further checked if the FS_Type comprises a flag, FSTYPE_REKEY, to indicate that a re-keying is in progress. If a re-keying operation has started, the re-keying operation is continued from where it left off, which is determined based on FS_ReKeyOffset. In particular, since files are re-encrypted in order during a re-keying operation, all files (and content) from before the offset can be assumed to have been re-encrypted already. In order to continue the re-keying operation, the old encryption key is decrypted using the FS_ReKey information. In particular, K_ENC_OLD is derived in the same manner as described in step 4 of the re-keying operation described above, and used to decrypt the old K_ENC from FS_OldKey in the FS_Buffer in FileSystem header.

Information stored in FS_ReKey is also used to recover enough information to complete the re-encryption of partially re-encrypted files that have ciphertext from both the old and new key. In particular, it is determined whether FSREKEY_BACKUP is set. If FSREKEY_BACKUP is not set, re-encryption operations proceed from after the FSREKEY_OFFSET address location. If FSREKEY_BACKUP is set, the backup of the ciphertext block at location FS_ReKeyOffset is decrypted with the old key and re-encrypted with the new key (the new K_ENC), and written at FS_ReKeyOffset.

Re-encryption operations then proceed from after the FSREKEY_OFFSET address location. Whether or not FS_ReKeyBlock contains a currently valid backup of the address indicated by whichever is the currently applicable FS_ReKeyOffset field is indicated by the FSREKEY_BACKUP flag. The FS_ReKeyState contains the backup flag and indicator of which of the FS_ReKeyOffset fields updated as a one byte atomic update, enabling fail-safe updates of the state information as it transitions through each ciphertext block. Entry_GenCtr fields for the re-keyed filesystem are set deterministically as per the re-keying algorithm after the old Entry_GenCtr values are no longer needed for computing the IVs under the old key. In this way an additional step may be performed before S703, to complete a re-keying operation.

If the FSTYPE_OLD_GENCTR flag is set, the Entry_GenCtr updates are completed as per the fail-safe GenCtr update algorithm.

After completion of all other recovery operations, or if there were no apparent recovery operations but the FSTYPE_DIRTY flag was set, then any intermediate state in FS_Buffer is also securely erased in order to remove any data (such as encrypted copies of old keys or old encrypted PIN etc.) that is present, before clearing the FSTYPE_DIRTY flag.

In some examples, a change of PIN may be implemented as a re-keying event, with a fresh FS_Nonce generated.

Alternatively a PIN may be modified without the need to re-encrypt or re-MAC the filesystem. A PIN change without re-keying can be implemented by storing an additional FS_PIN field in the FS_Header. This field contains an HSM-generated nonce encrypted using a key K_PIN derived from the HSM-protected key K_HSM, a use-case identifier string such as "K_PIN" and the PIN. K_PIN may be derived using a secure key-derivation function such as the Concatenation Key Derivation Function from NIST SP 800-56A section 5.8.1, with keydatalen set to KEY_SIZE. When deriving all other keys requiring the PIN as input (such as K_MAC and K_ENC if they require it), the FS_PIN is decrypted and used as an input to the key-derivation, instead of using the PIN directly. When updating the PIN:
1. The FSTYPE_DIRTY flag is set on FS_Type.
2. The FS_OldPIN in FS_Buffer is used to store the old FS_PIN encrypted value.
3. FS_Type FSTYPE_OLD_PIN is set to indicate that this backup copy of the previous FS_PIN is present in FS_Buffer.
4. FS_PIN is updated with the nonce re-encrypted using the new PIN.
5. FS_Type is updated to clear the FSTYPE_OLD_PIN flag so that the backup FS_PIN shall no longer be in use.
6. The FSTYPE_OLD_PIN value in FS_Buffer is erased.
7. The FSTYPE_DIRTY flag is cleared on FS_Type.

In examples in which re-keying is possible, the following additional steps may be performed in the method of performing an access operation on a device described in relation to Figure 7. In S702, it is further checked if the FS_Type comprises a flag FSTYPE_OLD_PIN. If this flag is present, the PIN change update has not completed, so the contents of FS_OldPIN should be restored to FS_PIN, the FSTYPE_OLD_PIN flag cleared, and then FS_OldPIN erased.

Alternatively, the FS_Nonce could be encrypted directly using the PIN and K_HSM, avoiding the storage overhead of the additional FS_PIN field; this would not be an option for schemes where some encryption or verification options are available that require only knowledge of the FS_Nonce and K_HSM.

### Ciphersuite

In some examples, more than one ciphersuite is supported. The ciphersuite to be used for the filesystem is indicated using the FS_ciphersuite field. BLOCK_SIZE is the block size of the symmetric encryption cipher. The ciphersuite defines the set of algorithms to be used for functions such as key derivation (for the authentication key K_MAC for example) and the MAC computation method for example.

Two example ciphersuites are described here, together with per-filesystem and per-file overheads assuming default field sizes as described above):

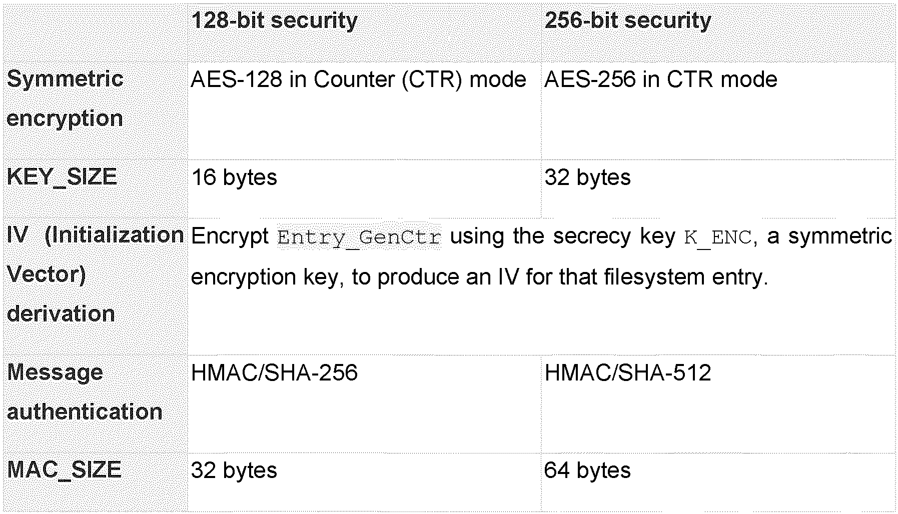

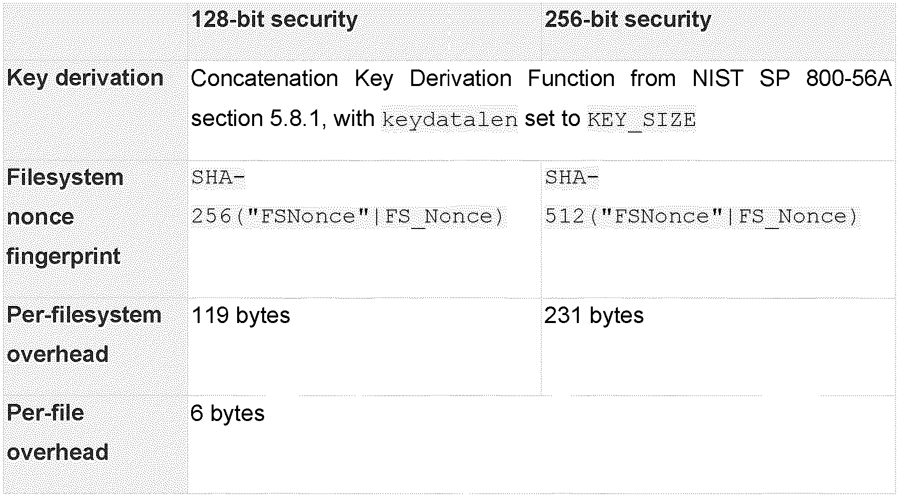

The filesystem nonce fingerprint is created by applying a cryptographic hash function to the concatenation of some fixed use-case identification string such as "FSNonce" and the nonce itself. Concatenation with the string is an optional step, that mitigates issues that may arise were the key derivation function's implementation to use the hash of the nonce directly as an input to deriving the symmetric encryption key.

In the above it is assumed that a unique IV (Initialization Vector) or unique nonce (if applicable to the cipher mode) for the encryption of a given file can securely be derived from Entry_GenCtr (either by direct use of the Entry_GenCtr if that is secure, or by encrypting Entry_GenCtr if not) and that a separate IV of full block size is not required to be stored. It is also assumed that ciphertext size is identical to plaintext size, with no need for padding, and that ciphertext can be decrypted from a random offset, at least when the offset is a multiple of the block length. The per-file overhead is always 6 bytes regardless of ciphersuite if these assumptions are met. Alternative encryption schemes that have the same properties can be employed instead with the same resulting per-file overheads.

Cipher modes that do not provide these properties may alternatively be used by including additional overheads in the file or filesystem headers, for example:
• If the security of the system requires a randomly generated Initialization Vector rather than one derived from Entry_GenCtr, a Entry_IV field is added to each File header, with length the size of the key block size, for storage of an HSM-generated random IV which will be unique to each File and never re-used, and also reserve additional buffer space in FS_ReKey for a copy of the updated IV for a file when re-keying in-place if re-use of the IV with the *different* key is not deemed acceptable.
• If using an encryption scheme that must encrypt/decrypt messages that are whole multiples of the encryption algorithm's block size, a padding scheme such as PKCS#7, or an alternative scheme such as CTS (CipherText Stealing), may be used.
• If using an encryption scheme that does not support random-access decryption, additional buffer space may be reserved in FS_ReKey to support resynchronization with partial ciphertexts when re-keying in-place, or if that is not guaranteed to be possible in general within a small number of blocks, then the encryption scheme may be adapted to encrypt the file in chunks, each with their own unique (possibly deterministically generated, e.g. from a counter) IV.
• If authenticated encryption (e.g. AES in GCM mode) is used to encrypt file name and contents, the tag is included with the ciphertext, and additional buffer space reserved in FS_ReKey for tags on partial data when re-keying in-place. Authenticated encryption at the per-file level does not obviate the need for a whole filesystem MAC to assure that the entire filesystem state is correct, but could support optimization of updating the MAC as part of an update.

In the above-described examples, authentication information is generated corresponding to the file system. In a further example, separate authentication information may additionally be generated in respect of each file. This option uses additional per-file storage. For each entry of type ETYPE_FILE, a MAC field is provided. Alternatively, an authenticated-encryption scheme (such as GCM) may be used for encryption of the file contents, in which case there will be an authentication tag for each entry of type ETYPE_FILE. Additional space may need to be reserved in the filesystem buffer to account for a backup of the previous MAC or authentication tag when a file is being re-encrypted during re-keying if this independent MAC or tag must be preserved independently of the filesystem MAC (as would be the case if the filesystem MAC calculation is optimized by including per-file MACs or tags rather than the whole data).

In a yet further example in which separate authentication information is additionally generated in respect of each file, the filesystem authentication information (for example the filesystem MAC information stored in FS_MAC1 or FS_MAC2) is computed across the MAC or tag of the files, instead of the content of the files. This means that the Entry_GenCtr. Entry_NameLen , Entry_Name and Entry_Content fields do not have the filesystem MAC computed across them, and are not read in their entirety from the storage when the filesystem MAC is computed. The details of which fields can be omitted may vary according to the encryption scheme. In this example, additional storage is used for the per-file authentication information, but reduced computation cost is used when computing the filesystem authentication information (e.g. the filesystem MAC), and all existing file content is not read first. The per-file MAC approach may be more attractive if updates are more frequent, whereas avoiding it can be more attractive if updates are rare and storage space is at a premium. In an example where some files are not encrypted and the per-file authentication information is generated by using an authenticated encryption scheme such as GCM (rather than a separate per-file MAC), the non-encrypted content is still included in the overall filesystem MAC.

The above-described methods may provide authenticity of the filesystem, storing authentication information corresponding to the file system in the filesystem information, for example in the filesystem header. The above-described methods may further provide secrecy, by encryption of the file names and contents. Revocability of outdated filesystem states may also be provided, by storage of a generation counter. Thus the methods may provide security qualities including authenticity, integrity and revocability, whilst preserving fail-safety, transaction-safety and small storage overhead features.

The above-described methods may reduce the need for trust in an external storage device, such as a smartcard. It may also further reduce the ability of an attacker to recover usable content from a smartcard that has been disposed of after formatting. It may also allow for storage for keys or other small secret data, either in the HSM or in a smartcard or other external storage, whilst benefitting from secrecy and authenticity for those files, for example in addition to storage of token shares that have their own HSM encryption and integrity checking.

As described above, authenticity may be provided over the entire filesystem state, not just on individual files separately, so that the entire state is assured, and an attacker cannot e.g. delete files without detection. The methods may be particularly suitable for small storage for keys and other relatively small secrets. In some examples, the state of the filesystem is versioned, and the minimum acceptable version is identified in out-of-band storage, so that an attacker cannot revert to a previous state of the data nor present a clone of storage from before a PIN change. Fail-safety and transaction-safety qualities may be provided whilst also achieving the authenticity and integrity features, including in the case of re-encryption in-place, whilst minimizing the per-filesystem and per-file storage overheads of the scheme. Is some examples, fail-safety and transaction-safety may be combined with cryptographic security benefits, minimal storage size overheads and support for small storage devices, as well as authenticity of a whole storage state and revocability of previous versions.

The above description describes a filesystem structure in persistent storage media, such as in physical authentication tokens or HSM storage. The filesystem is particularly suitable for the storage and retrieval of data such as cryptographic keys, where the filesystem may be implemented on physical tokens such as smartcards, or small secure storage areas on HSMs (Hardware Security Modules). The filesystem is also suitable for media having a storage capacity in the range of hundreds of bytes to around 64 KB. Nevertheless, it will be immediately apparent to the person skilled in the art that the filesystem and methods disclosed herein are suitable for use on any device having persistent storage media, and having any size storage capacity. Thus, the size or intended use of the storage device puts no constraint on the ability to use the filesystem or methods disclosed herein.

The methods described herein are designed to mitigate potential issues involved in the updating of such filesystems (for example, smartcard filesystems). The filesystem structure and methods of updating said filesystem structure mitigate against issues when updates carried out remotely (for example, over a network connection) are interrupted, for example if the network were to lose connection, or alternatively if the connection were removed or switched off at an HSM. Interruptions may also occur during updates to local smart cards or HSM storage. For example, we disclose herein how to mitigate against issues such as removing a smartcard from the reader during a write, power failure, disconnection of a card reader cable during a write, or software crash in the smartcard or in the HSM during a write operation.

The filesystem structure and corresponding methods disclosed herein may also solve other problems, for example mitigating against the corruption of data in a filesystem during a loss of connection, and maintaining security of sensitive information. Security of data may be maintained by providing authentication information corresponding to the filesystem. Corruption is mitigated by ensuring that an intermediate state of a file transaction cannot be read and is subsequently rolled forward or backward by a repair operation, including the authentication information.

The methods disclosed herein may provide improved transaction-safety for changes involving single files or groups of files, whilst reducing file and filesystem storage size overheads so that storage devices having small capacities (e.g., less than 64 KB) may be supported. Transaction-safety for a group of files provides an ability to atomically update a group of files, and have the update roll forward or roll back the whole group in the event of failure. Transaction-safety for an update to a single existing file is also relevant, to avoid an intermediate state that was a partial update, or two copies of the file, etc. Again, transaction-safety allows the update to roll forward or back in the event of failure.

The disclosed methods support changes across multiple files as a single atomic transaction when there is enough free space. The user may optionally configure the implementation such that the transaction method automatically falls down to lower consistency level when there is insufficient storage space for a higher consistency. At the lower consistency level, file header updates are still performed by storing a redundant copy of the file length, mitigating against corrupt files and a corrupt filesystem. Furthermore, the headers for new entries are not visible until the header has been fully written, i.e. the header is written into free space, and then the free space entry is resized safely via the redundant length to make that new entry visible as an atomic operation. In this way, any file header updates are written so that interruption when writing any given byte cannot result in a malformed filesystem or one where the wrong content appears to be present in a file.

Furthermore, files are not committed until all of their content (or replacement content if updating a file) has been written. At the lower consistency level, the consistency will be at the file level rather than across a group of files, where any individual files will not be committed until all content/replacement content is written. Furthermore, at the lower consistency level, files not included in a transaction instruction cannot be lost in an event of failure. This is because file header updates are done in a manner that means the filesystem can still be navigated if a change was interrupted, i.e. a redundant copy of the file length is stored.

Furthermore, files not included in a transaction instruction will not be marked as uncommitted at any point. The only changes to files not included in a transaction instruction will be to move them if compacting the filesystem, in which case the transaction-safe compacting algorithm ensures that there is no loss of data in the event of interruption as all file contents are recoverable even if they are in two fragments during the move.

Improved fail-safety against corruption or loss of files or the filesystem in the face of interrupted writes to the underlying storage may be provided. Fail-safety provides that any individual byte write can fail, but the filesystem can be recovered. Fail-safety improvements are provided with any writes to both smartcards and HSM storage. For example, improved fail-safety is provided during filesystem compaction, header updates, or filesystem formatting. Transaction-safe and fail-safe updates may be provided with reduced storage size overheads, which may be used with smartcards, HSMs or small key-storage tokens.

The methods disclosed herein may also provide reduced risk of remanence (e.g. residual magnetism in a physical hard drive storage) of previous data, by ensuring all erased files and formatted storage are fully zeroised. Furthermore, it should be appreciated that those skilled in the art could similarly apply a scheme to replace zeroization with yet more robust format-safe operation, such as remanence-resistant erasure operations appropriate to the particular physical storage in use.

In the above-described embodiment, various example methods have been described. However, these have been presented by way of example only, and the skilled person would understand that various omissions, substitutions and changes in the methods may be made.

For example, in the above description, a filesystem header is included in the filesystem, as shown in Table 1a. The filesystem header stores various flags. However, the filesystem header may be omitted. The flag used to indicate a transaction is in progress may be omitted. In this case, the check of this flag is simply omitted during the recovery stage. Furthermore, the flag used to indicate whether the filesystem is formatted may also be omitted. Again, this check is simply omitted during the recovery stage.

Instead of a flag in the filesystem header used to indicate a transaction as being committed, a committed file type may be introduced to indicate this information. In particular, an ETYPE_COMMITTED_FILE type may be introduced to flag a write transaction operation as being committed. During a write operation, when all the new files have been written as uncommitted type, the header typecode of each new file is then changed to ETYPE_COMMITTED_FILE in S109b. All the original files with the same ID are then erased, and the typecode on the new files will now be changed to ETYPE_FILE. During a repair action, if any ETYPE_COMMITTED_FILE is found, the commit process will be completed. If there are ETYPE_UNCOMMITTED_FILE files present, then it is supposed that interruption occurred after all the new files were written (because there was a file with a COMMITTED typecode set) and so all uncommitted files are changed to ETYPE_COMMITTED_FILE. Any ETYPE_FILE with ID duplicating any ETYPE_COMMITTED_FILE is then erased. Any ETYPE_COMMITTED_FILE typecodes are then updated to ETYPE_FILE typecodes. If no COMMITTED files are found during a repair action, ETYPE_UNCOMMITTED_FILEs are simply erased.

Erasure of files may be performed by (effectively) doing the file write steps backwards. This means that a transaction operation with new/updated files must be performed separately to a transaction operation with erasures to allow them to be distinguished for recovery purposes when rolling back or rolling forward an interrupted transaction. Firstly, all ETYPE_FILE typecodes of files to be erased are updated to ETYPE_COMMITTED_FILE. Then, each of these files are downgraded to ETYPE_UNCOMMITTED_FILE. Finally all the uncommitted files are erased. This is essentially the reverse of what the write operation does when committing a set of files, and shares the same recovery code.

An ETYPE_FRAGMENT_INDEX entry may be created on-the-fly to record the state of a compaction operation, i.e. to store the compaction information which is described above as being stored in the filesystem header. Free-space entries may have space reserved in their header for the alternate length, and the alternate length for fragments may be stored in the fragment index.

In the above description, various file types are described. These file types are not exhaustive, and additional file types could be included. For example, separate private and user files could be included, where private files comprise files that are readable only internally by the HSM and invisible to users, and user files that are readable by users of the HSM, subject to suitable access controls. Alternatively, this could be implemented in the variable-length file name with suitable naming conventions, instead of including separate file types.

The concept of persistent and non-persistent files types could be introduced with an ETYPE_PERSIST flag on Entry_Type (alternatively, such distinctions could be encoded into the file name if desired). An operation to delete all non-persistent files as a single transaction could be included. Such a call will fail if the file system is invalid. If such a call is interrupted, when the filesystem is read again it will either be rolled-back to the original state with all the non-persistent files as well as the persistent files still present, or rolled-forward to the intended state with only the persistent files. This operation erases all files that do not have an ETYPE_PERSIST flag set. Firstly all ETYPE_FILE typecodes of non-persistent files are updated to ETYPE_COMMITTED_FILE. Then each of these files are downgraded to ETYPE_UNCOMMITTED_FILE. Finally all the uncommitted files are erased.

While certain embodiments have been described, these embodiments have been presented by way of example only, and are not intended to limit the scope of the inventions. Indeed the novel methods and apparatus described herein may be embodied in a variety of other forms; furthermore, various omissions, substitutions and changes in the form of methods and apparatus described herein may be made.

## Claims

1. A method of performing a file transaction, the method comprising:
providing a transaction instruction to perform a set of one or more transaction operations on a device storing a filesystem, wherein the filesystem stores, in a first location, first authentication information corresponding to the filesystem state, and wherein the filesystem further stores authentication identification information, the authentication identification information indicating that the first location stores valid authentication information;
performing the one or more transaction operations with an uncommitted type;
generating second authentication information corresponding to the filesystem state after the transaction operations, and storing the second authentication information in a second location in the filesystem;
storing transaction information in the filesytem indicating that the transaction is committed and updating the authentication identification information to indicate that the second location stores valid authentication information.

2. The method according to claim 1, wherein the second authentication information is generated by performing a cryptographic operation on contents of the filesystem using a first cryptographic key.

3. The method according to claim 2, wherein the first cryptographic key is derived using first information stored in the filesystem and second information stored on a second device, wherein the second device is a hardware security module.

4. The method according to any preceding claim, wherein performing the one or more transaction operations with an uncommitted type comprises, responsive to determining the transaction instruction comprises one or more write transaction operations, wherein the one or more write transaction operations collectively relate to a first file group comprising at least one file object, the first file group has a first size, and each of the at least one file objects comprises identification information, if the first size does not exceed available device storage, writing each of the at least one file objects with an uncommitted file type into the filesystem;
wherein storing the transaction information in the filesytem indicating that the transaction is committed and updating the authentication identification information to indicate that the second location stores valid authentication information is performed after the first file group is written, wherein the method further comprises:
responsive to determining that one or more pre-existing file objects share identification information with any of the first file group, erasing the one or more pre-existing file objects; and
updating the type of each of the at least one file objects in the first file group to a finalised type.

5. The method according to any preceding claim, further comprising:
obtaining a previous maximum transaction count value;
for each file object to which the transaction instruction relates:
determining a transaction count value; and
writing the transaction count value in the file object; and
writing a new maximum transaction count value in a second device together with information identifying the filesystem.

6. The method according to any preceding claim, wherein at least some content of the filesystem is stored encrypted using a second cryptographic key, the method further comprising:
generating a new second cryptographic key;
setting a re-encryption progress flag indicating a re-encryption process is in progress;
re-encrypt the at least some content of the file system using the new second cryptographic key;
unsetting the re-encryption progress flag.

7. A method according to any preceding claim, wherein performing the one or more transaction operations with an uncommitted type comprises, responsive to determining that the transaction instruction comprises one or more erase transaction operations, the one or more erase transaction operations collectively relating to a file group to be erased from the device storage, the file group comprising at least one file object, updating each of the at least one file objects in the file group to an uncommitted erase type;
wherein storing the transaction information in the filesytem indicating that the transaction is committed and updating the authentication identification information to indicate that the second location stores valid authentication information is performed after the file group is updated to an uncommitted erase type; and wherein the method further comprises:
erasing the file group.

8. A method of performing authentication of a filesystem stored on a first device, comprising:
obtaining authentication identification information from the filesystem, the authentication identification information indicating a location storing valid authentication information;
obtaining stored authentication information from the location indicated by the authentication identification information;
authenticating the filesystem based on the stored authentication information.

9. The method of claim 8, further comprising:
determining whether the filesystem stores transaction information indicating that a transaction is committed;
determining whether there are any file objects in the filesystem having an uncommitted file type;
responsive to determining that the device stores transaction information indicating that a transaction is committed and there are one or more file objects having an uncommitted file type:
updating the type of the one or more file objects having an uncommitted file type to a finalised type; and
authenticating the filesystem based on authentication information stored in a first location; and
responsive to determining that the device does not store transaction information indicating that a transaction is committed and there are one or more file objects having an uncommitted file type:
erasing the files having an uncommitted file type; and
authenticating the filesystem based on authentication information stored in a second location.

10. The method of claim 8 or 9, further comprising:
retrieving a transaction count value from a second device;
retrieving a transaction count value from each file object in the filesystem, and determining a maximum transaction count value for the filesystem; and
comparing the transaction count value retrieved from the second device and the maximum transaction count value for the filesystem, wherein responsive to the transaction count value retrieved from the second device being different to the maximum transaction count value, preventing an access operation.

11. The method of any of claims 8 to 10, further comprising:
determining whether a re-encryption progress flag is set;
responsive to determining the re-encryption progress flag is set;
determining a location corresponding to the progress of the re-encryption process;
continuing the re-encryption process based on the determined location.

12. A non-transitory data carrier carrying processor control code to, when executed, cause a computer to perform the method of any of claims 1 to 11.

13. A device, comprising:
one or more processors configured to:
provide a transaction instruction to perform a set of one or more transaction operations on a device storing a filesystem, wherein the filesystem stores, in a first location, first authentication information corresponding to the filesystem state, and wherein the filesystem further stores authentication identification information, the authentication identification information indicating that the first location stores valid authentication information;
perform the one or more transaction operations with an uncommitted type;
generate second authentication information corresponding to the filesystem state after the transaction operations, and storing the second authentication information in a second location in the filesystem;
store transaction information in the filesytem indicating that the transaction is committed and updating the authentication identification information to indicate that the second location stores valid authentication information.

14. A device, comprising:
one or more processors configured to:
obtain authentication identification information from a filesystem stored on a first device, the authentication identification information indicating a location storing valid authentication information;
obtain stored authentication information from the location indicated by the authentication identification information;
authenticate the filesystem based on the stored authentication information.

15. A system, comprising the device of claim 13 or 14 and another device, wherein the device storage is located on the other device.
